# EUROPEAN PATENT APPLICATION

(11) **EP 4 800 275 A1**
(43) Date of publication of application: **02.09.2026**
(21) Application number: 24882392.4
(22) Date of filing: 22.10.2024
(51) Int. Cl.: F16K 17/30, F04C 18/02

(54) **VALVE**

(30) Priority: 27.10.2023 JP 2023185027
(71) Applicant: Eagle Industry Co., Ltd., Minato-ku Tokyo 105-8587 (JP)
(72) Inventor: KURIHARA Daichi, Tokyo 105-8587 (JP)
(74) Representative: WSL Patentanwälte Partnerschaft mbB
(86) International application number: PCT/JP2024/037615
(87) International publication number: WO 2025/089281

(57) **Abstract**

There is provided a valve that enables easy adjustment of a controlled device. A valve V1 includes a housing 60 having a high-pressure space S2 into which a high-pressure fluid Pd flows, a back-pressure space S3 into which a back-pressure fluid Pb flows, a low-pressure space S1 into which a low-pressure fluid Ps flows, and a passage 68 providing a communication between the high-pressure space S2 and the back-pressure space S3; and a valve body 61 that has a high pressure-receiving surface (A1 - B1) facing the high-pressure space S2, a back pressure-receiving surface (A1 - E) facing the back-pressure space S3, and a low pressure-receiving surface (B1 - E) facing the low-pressure space S1, and that controls an opening degree of the passage 68. The valve V1 is provided with a communication passage 67 that provides a communication between the back-pressure space S3 and the low-pressure space S1.

## Description

### {TECHNICAL FIELD}

The present invention relates to a valve, for example, a valve that controls pressure.

### {BACKGROUND ART}

A scroll compressor is one type of compressor used in various industrial fields, and this type of compressor is used, for example, in a wide range of applications such as refrigeration cycles owing not only to a high compression efficiency but also to low noise.

The scroll compressor includes a scroll compression mechanism composed of a fixed scroll including a spiral wrap and a movable scroll including a spiral wrap; an eccentric mechanism attached to a rotating shaft for eccentrically rotating the movable scroll; and the like, and has a structure in which the movable scroll slides relative to the fixed scroll while eccentrically rotating with respect to the fixed scroll, thereby pressurizing a fluid that is a refrigerant supplied from a low-pressure chamber on an outer-diameter side of both scrolls, and discharging the high-pressure refrigerant from a discharge hole formed at the center of the fixed scroll.

In this type of scroll compressor, when the pressure in a discharge chamber from which the refrigerant compressed by the scroll compression mechanism is discharged increases, a force acts in a direction in which the movable scroll is separated from the fixed scroll.

A scroll compressor of Patent Citation 1 is provided with a back-pressure communication passage that allows communication between a discharge chamber and a back-pressure chamber formed on a back surface side of a movable scroll, and an orifice is provided in the back-pressure communication passage. Since a portion of a refrigerant compressed in the discharge chamber is depressurized and adjusted by the orifice, is supplied to the back-pressure chamber, and presses the movable scroll toward a fixed scroll, the movable scroll is prevented from separating from the fixed scroll.

In addition, the scroll compressor is provided with a pressure relief hole that allows communication between the back-pressure chamber and a suction chamber, and the pressure relief hole is provided with a pressure adjustment valve that adjusts the pressure in the back-pressure chamber by releasing the pressure to a low-pressure chamber. When a force that pushes a valve body in an opening direction due to the pressure in the back-pressure chamber is greater than a force that pushes the valve body in a closing direction due to the pressure in the low-pressure chamber and the biasing force of a spring, the pressure adjustment valve opens, and therefore the refrigerant in the back-pressure chamber flows to the low-pressure chamber, and the pressure in the back-pressure chamber decreases. Accordingly, an increase in the pressure of the back-pressure chamber is prevented from causing the movable scroll to be excessively pressed against the fixed scroll, thereby preventing interference with the smooth operation of the movable scroll.

### {CITATION LIST}

### {Patent Literature}

Patent Citation 1: WO 2022/009769 (Pages 8 and 9, FIG. 1)

### {SUMMARY OF INVENTION}

### {Technical Problem}

In such a scroll compressor of Patent Citation 1, when adjustment is performed to comply with specifications, it is necessary to machine the scroll compressor side such as re-machining the back-pressure communication passage or the pressure relief hole, replacing the orifice provided in the back-pressure communication passage, and replacing a spring constituting the pressure adjustment valve, the work becomes complicated.

The present invention has been made in view of such a problem, and an object of the present invention is to provide a valve that enables easy adjustment of a controlled device.

### {Solution to Problem}

In order to solve the foregoing problem, a valve according to a first aspect of the present invention is a valve including a housing having a high-pressure space into which a high-pressure fluid flows, a back-pressure space into which a back-pressure fluid flows, a low-pressure space into which a low-pressure fluid flows, and a passage configured to provide a communication between the high-pressure space and the back-pressure space; and a valve body that has a high pressure-receiving surface configured to face the high-pressure space, a back pressure-receiving surface configured to face the back-pressure space, and a low pressure-receiving surface configured to face the low-pressure space, and that controls an opening degree of the passage, wherein the valve further comprises a communication passage configured to provide a communication between the back-pressure space and the low-pressure space. According to the feature of the present invention, since the valve is provided with the communication passage that allows communication between the back-pressure space and the low-pressure space, it is possible to easily adjust a controlled device without machining the controlled device side.

It may be preferable that the communication passage is a passage penetrating through the valve body. According to this preferable configuration, it is possible to form the communication passage without machining the controlled device.

It may be preferable that the communication passage is a passage penetrating through the housing. According to this preferable configuration, it is possible to form the communication passage without machining the controlled device.

It may be preferable that the back-pressure space and the low-pressure space are disposed adjacent to each other, and the communication passage is defined by the housing and the valve body. According to this preferable configuration, it is possible to configure the communication passage in a simple manner without machining the controlled device.

It may be preferable that the communication passage is a radial gap between the housing and the valve body, and always communicates with the back-pressure space and the low-pressure space. According to this preferable configuration, it is possible to configure the communication passage in a simple manner without machining the housing or the valve body.

In order to solve the foregoing problem, a valve according to a second aspect of the present invention is a valve including a housing having a high-pressure space into which a high-pressure fluid flows, a back-pressure space into which a back-pressure fluid flows, a low-pressure space into which a low-pressure fluid flows, and a passage configured to provide a communication between the back-pressure space and the low-pressure space; and a valve body that has a high pressure-receiving surface configured to face the high-pressure space, a back pressure-receiving surface configured to face the back-pressure space, and a low pressure-receiving surface configured to face the low-pressure space, and that controls an opening degree of the passage, wherein the valve further comprises a communication passage configured to provide a communication between the high-pressure space and the back-pressure space. According to this preferable configuration, since the valve is provided with the communication passage that allows communication between the high-pressure space and the back-pressure space, it is possible to easily adjust a controlled device without machining the controlled device side.

It may be preferable that the communication passage is a passage penetrating through the housing. According to this preferable configuration, it is possible to form the communication passage without machining the controlled device.

It may be preferable that the communication passage is a passage penetrating through the valve body. According to this preferable configuration, it is possible to form the communication passage without machining the controlled device.

It may be preferable that the high-pressure space and the back-pressure space are disposed adjacent to each other, and the communication passage is defined by the housing and the valve body. According to this preferable configuration, it is possible to configure the communication passage in a simple manner without machining the controlled device.

It may be preferable that the communication passage is a radial gap between the housing and the valve body, and always communicates with the high-pressure space and the back-pressure space. According to this preferable configuration, it is possible to configure the communication passage in a simple manner without machining the housing or the valve body.

### {BRIEF DESCRIPTION OF DRAWINGS}

FIG. 1 is a schematic configuration view illustrating a scroll compressor to which a valve according to a first embodiment of the present invention is applied.
FIG. 2 is a cross-sectional view of the valve according to the first embodiment.
FIG. 3 is a cross-sectional view of the valve according to the first embodiment in a closed state that is a normal state.
FIG. 4 is a cross-sectional view of Modification Example 1-1 of the valve according to the first embodiment.
FIG. 5 is a cross-sectional view of a valve according to a second embodiment of the present invention.
FIG. 6 is a cross-sectional view of Modification Example 2-1 of the valve according to the second embodiment.
FIG. 7 is a cross-sectional view of Modification Example 2-2 of the valve according to the second embodiment.
FIG. 8 is a cross-sectional view of a valve according to a third embodiment of the present invention.
FIG. 9 is a cross-sectional view of a modification example 3-1 of the valve according to the third embodiment.
FIG. 10 is a cross-sectional view of a modification example 3-2 of the valve according to the third embodiment.
FIG. 11 is a cross-sectional view of a valve according to a fourth embodiment of the present invention.
FIG. 12 is a cross-sectional view of the valve according to the fourth embodiment in a closed state in which a valve body has moved due to a pressure difference.
FIG. 13 is a cross-sectional view of a modification example 4-1 of the valve according to the fourth embodiment.
FIG. 14 is a cross-sectional view of a modification example 4-2 of the valve according to the fourth embodiment.
FIG. 15 is a cross-sectional view of a valve according to a fifth embodiment of the present invention.
FIG. 16 is a cross-sectional view of a modification example 5-1 of the valve according to the fifth embodiment.
FIG. 17 is a cross-sectional view of a valve according to a sixth embodiment of the present invention.
FIG. 18 is a cross-sectional view of a modification example 6-1 of the valve according to the sixth embodiment.
FIG. 19 is a cross-sectional view of a modification example 6-2 of the valve according to the sixth embodiment.

### {DESCRIPTION OF EMBODIMENTS}

Modes for implementing a valve according to the present invention will be described below based on embodiments.

### {First embodiment}

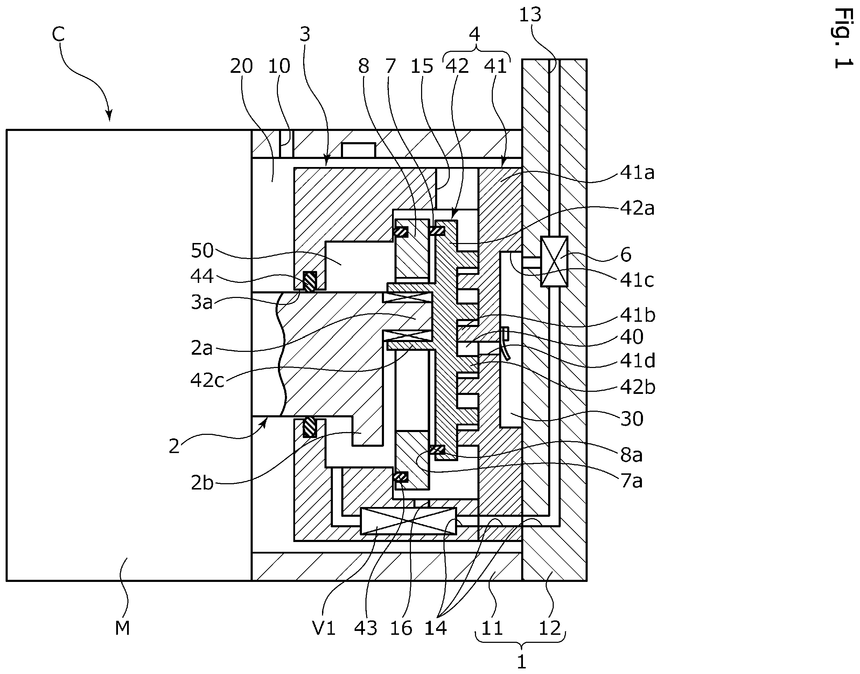

A valve according to the first embodiment will be described with reference to FIGS. 1 to 4. The valve of the present invention is applied to a rotary machine including an eccentric mechanism, for example, a scroll compressor C that suctions, compresses, and discharges a refrigerant as a fluid used in an air conditioning system for an automobile or the like. Incidentally, in the present embodiment, the refrigerant is a gas, and is mixed with lubricating oil in the form of a mist.

First, the scroll compressor C will be described. As illustrated in FIG. 1, the scroll compressor C is mainly composed of a housing 1, a rotary shaft 2, an inner casing 3, a scroll compression mechanism 4, a side seal 7, a thrust plate 8, and a drive motor M.

The housing 1 is composed of a casing 11 having a cylindrical shape, and a cover 12 that closes an opening of the casing 11. An opening of the casing 11 on the side axially opposite to the opening closed by the cover 12 is closed by the drive motor M.

Inside the casing 11, a low-pressure chamber 20 to which a low-pressure refrigerant, that is, a suction fluid Ps as a low-pressure fluid, is supplied from a refrigerant circuit (not illustrated) through a suction port 10, a high-pressure chamber 30 serving as a discharge chamber from which a high-pressure refrigerant compressed by the scroll compression mechanism 4, that is, a discharge fluid Pd as a high-pressure fluid, is discharged, and a back-pressure chamber 50 to which a portion of the refrigerant compressed by the scroll compression mechanism 4 together with the lubricating oil, that is, a control fluid Pb as a back-pressure fluid, is supplied via a back-pressure control valve V1 are formed. Incidentally, the back-pressure chamber 50 is formed inside the inner casing 3 having a cylindrical shape that is accommodated inside the casing 11.

A discharge communication passage 13 that allows communication between the refrigerant circuit (not illustrated) and the high-pressure chamber 30 is formed in the cover 12. In addition, a part of a back-pressure communication passage 14 that allows communication between the high-pressure chamber 30 and the back-pressure chamber 50 is formed in the cover 12 by branching off from the discharge communication passage 13. Incidentally, an oil separator 6 that separates the lubricating oil from the refrigerant is provided in the discharge communication passage 13.

The inner casing 3 is fixed in a state in which an axial end portion of the inner casing 3 abuts against an end plate 41a of a fixed scroll 41 constituting the scroll compression mechanism 4. In addition, a suction communication passage 15 is formed in a side wall of the inner casing 3 so as to penetrate therethrough in a radial direction. That is, the low-pressure chamber 20 is formed from the outside of the inner casing 3 to the inside of the inner casing 3 via the suction communication passage 15. The suction fluid Ps supplied to the inside of the inner casing 3 through the suction communication passage 15 is suctioned into the scroll compression mechanism 4.

The scroll compression mechanism 4 is mainly composed of the fixed scroll 41 fixed to the cover 12 in a sealed manner, and a movable scroll 42 accommodated inside the inner casing 3.

The fixed scroll 41 is made of metal, and includes a wrap 41b having a spiral shape that protrudes from a front surface of the end plate 41a having a disk shape, that is, an end surface of the end plate 41a which faces the movable scroll 42, toward the movable scroll 42. In addition, in the fixed scroll 41, a recess 41c recessed in a direction opposite to the cover 12 is formed on a back surface of the end plate 41a, that is, on an inner-diameter side of an end surface of the end plate 41a which abuts against the cover 12, and the high-pressure chamber 30 is defined by the recess 41c and the cover 12.

The movable scroll 42 is made of metal, and includes a wrap 42b having a spiral shape that protrudes from a front surface of an end plate 42a having a disk shape, that is, an end surface of the end plate 42a which faces the fixed scroll 41, toward the fixed scroll 41. In addition, a boss 42c protruding from the center of a back surface of the end plate 42a is formed on the movable scroll 42. An eccentric portion 2a formed in the rotary shaft 2 is inserted and fitted into the boss 42c so as to be rotatable relative to the boss 42c. Incidentally, in the present embodiment, the eccentric portion 2a of the rotary shaft 2 and a counterweight portion 2b protruding from the rotary shaft 2 in a radially outward direction constitute an eccentric mechanism that eccentrically rotates the rotary shaft 2.

When the rotary shaft 2 is rotationally driven by the drive motor M, the eccentric portion 2a rotates eccentrically, and the movable scroll 42 slides relative to the fixed scroll 41 while performing eccentric rotation in a state in which the movable scroll 42 maintains the posture. At this time, the movable scroll 42 rotates eccentrically with respect to the fixed scroll 41, and as the movable scroll 42 rotates, the contact positions between the wraps 41b and 42b move sequentially in a rotation direction, and a compression chamber 40 formed between the wraps 41b and 42b gradually decreases while moving toward the center. Accordingly, the suction fluid Ps suctioned into the compression chamber 40 from the low-pressure chamber 20 formed on an outer-diameter side of the scroll compression mechanism 4 is compressed, and finally, the high-pressure discharge fluid Pd is discharged into the high-pressure chamber 30 through a discharge hole 41d provided at the center of the fixed scroll 41.

The side seal 7 is made of resin, has a rectangular cross-section and an annular shape when viewed in an axial direction, and is fixed to the back surface of the end plate 42a of the movable scroll 42. A sliding surface 7a that abuts against a sliding surface 8a formed on the thrust plate 8 is formed on the side seal 7.

The thrust plate 8 is made of metal and has an annular shape, and a seal ring 43 is fixed to the thrust plate 8. The seal ring 43 abuts against an inner peripheral end surface of the inner casing 3. Accordingly, the thrust plate 8 functions as a thrust bearing that receives an axial load of the movable scroll 42 via the side seal 7.

In addition, the side seal 7 and the seal ring 43 partition the low-pressure chamber 20 formed on the outer-diameter side of the movable scroll 42 and the back-pressure chamber 50 formed on a back surface side of the movable scroll 42 inside the inner casing 3. The back-pressure chamber 50 is formed as a sealed space by sealing a gap between a through-hole 3a provided at the center of the inner casing 3 and the rotary shaft 2 inserted through the through-hole 3a using a seal ring 44 fixed to an inner periphery of the through-hole 3a.

In addition, the back-pressure control valve V1 serving as the valve is provided in the back-pressure communication passage 14 that is formed across the cover 12, the fixed scroll 41, and the inner casing 3 and that allows communication between the high-pressure chamber 30 and the back-pressure chamber 50. In other words, the back-pressure control valve V1 is provided in the interior of the housing 1, which is isolated from the outside air.

A portion of the discharge fluid Pd in the high-pressure chamber 30 which is supplied to the back-pressure control valve V1 together with the lubricating oil separated by the oil separator 6 is adjusted in pressure to the control fluid Pb, and is supplied to the back-pressure chamber 50.

In addition, a pressure relief hole 16 that allows communication between the back-pressure control valve V1 and the low-pressure chamber 20 is formed in the inner casing 3.

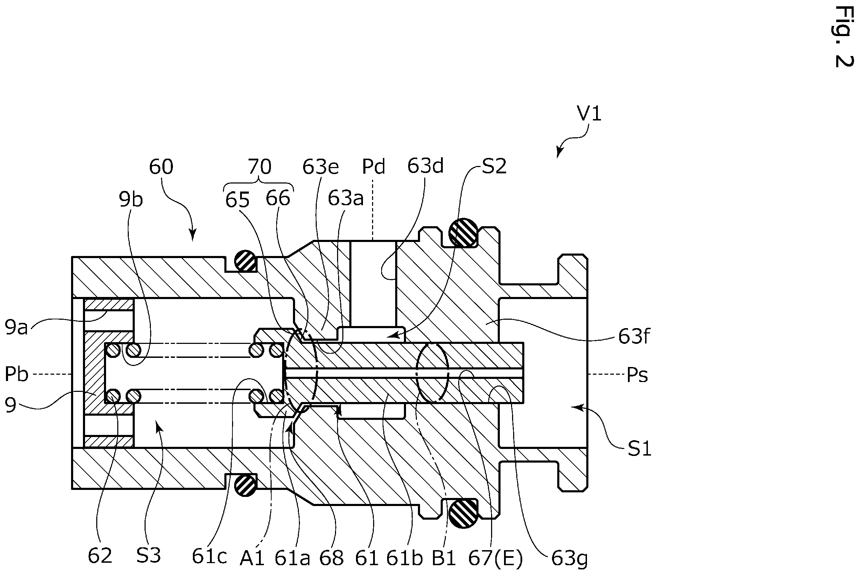

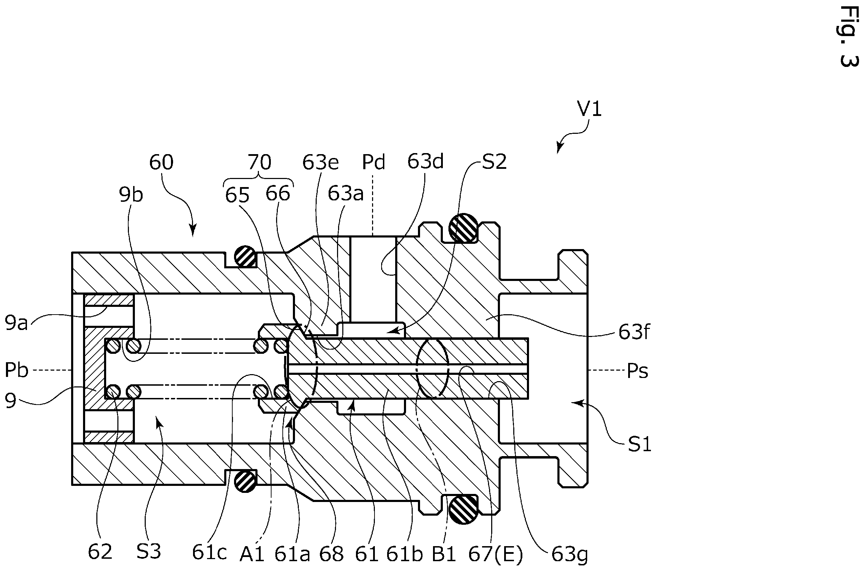

Next, the back-pressure control valve V1 serving as the valve in the present embodiment will be described with reference to FIGS. 2 and 3. Hereinafter, the left and right sides of FIG. 2 when viewed from the front side will be described as the left and right sides of the back-pressure control valve V1.

As illustrated in FIGS. 2 and 3, the back-pressure control valve V1 of the first embodiment is a normally closed valve that is mainly composed of a housing 60, a valve body 61, and a coil spring 62 serving as biasing means for biasing the valve body 61 in a seating direction, that is, a closing direction.

The housing 60 includes a low-pressure space S1 communicating with the low-pressure chamber 20; a high-pressure space S2 communicating with the high-pressure chamber 30; and a back-pressure space S3 communicating with the back-pressure chamber 50. Incidentally, the housing 60 may at least partially partition the low-pressure space S1, the high-pressure space S2, and the back-pressure space S3.

The housing 60 is formed in a tubular shape. A partition wall portion 63e extending toward the inner-diameter side is formed on the left side of the axial center of the housing 60. A valve hole 63a penetrating through the partition wall portion 63e in the axial direction is formed in a radial center portion of the partition wall portion 63e.

In addition, a tapered surface that increases the diameter of the valve hole 63a as the tapered surface extends toward the left is formed on the inner-diameter side of the partition wall portion 63e. The tapered surface serves as a valve seat 65 that a tapered surface 66 of a large-diameter body portion 61a of the valve body 61 comes into contact with and separates. That is, the valve seat 65 and the tapered surface 66 constitute a valve 70 that controls the opening and closing of a flow passage 68 between the valve seat 65 and the tapered surface 66 by allowing the valve seat 65 and the tapered surface 66 constitute a valve 70 to come into contact with and separate from each other. In addition, the flow passage 68 is configured such that the opening degree thereof is variable, thereby allowing the flow rate passing therethrough to be adjusted. Hereinafter, the adjustment of the opening degree of the flow passage 68 by the movement of the valve body 61 will be described as the adjustment of the opening degree of the valve 70.

A partition wall portion 63f extending toward the inner-diameter side is formed on the right side of an axial center portion of the housing 60. A through-hole 63g is formed in a radial center portion of the partition wall portion 63f.

A communication hole 63d penetrating through a peripheral wall of the housing 60 in the radial direction and communicating with the high-pressure chamber 30 is formed at the axial center of the peripheral wall.

A space sandwiched between the partition wall portions 63e and 63f in the axial direction is the high-pressure space S2. The high-pressure space S2 communicates with the high-pressure chamber 30 through the communication hole 63d.

The low-pressure space S1 is recessed in a right end surface of the housing 60 so as to open to the right in the axial direction. The low-pressure space S1 is partitioned from the high-pressure space S2 by the partition wall portion 63f.

A lid member 9 is attached to an inner peripheral surface of a left end opening portion of the housing 60 by screwing. Incidentally, the lid member 9 may be fixed to the housing 60 by various fixing means other than screwing; however, it is preferable that the axial position of the lid member 9 can be adjusted.

A plurality of through-holes 9a are formed in the lid member 9 so as to penetrate therethrough in the axial direction and communicate with the back-pressure chamber 50. A recess 9b that opens to the right is formed on a right end surface of the lid member 9.

A space sandwiched between the lid member 9 and the partition wall portion 63e of the housing 60 in the axial direction is the back-pressure space S3. The back-pressure space S3 is partitioned from the high-pressure space S2 by the partition wall portion 63e. The back-pressure space S3 communicates with the back-pressure chamber 50 through the through-holes 9a.

The valve body 61 includes the large-diameter body portion 61a and a small-diameter body portion 61b, and is formed in a stepped columnar shape.

The tapered surface 66 that is reduced in diameter as the tapered surface 66 extends toward the right in the axial direction is formed on the large-diameter body portion 61a. In addition, a recess 61c that opens to the left is formed on a left end surface of the large-diameter body portion 61a.

The large-diameter body portion 61a is disposed in the back-pressure space S3.

The small-diameter body portion 61b is formed in a columnar shape extending from a right end of the large-diameter body portion 61a to the right in the axial direction. A diameter of the small-diameter body portion 61b is substantially the same as a minimum outer diameter of the large-diameter body portion 61a.

The small-diameter body portion 61b is inserted through the valve hole 63a, the high-pressure space S2, the through-hole 63g, and the low-pressure space S1.

Since a gap between an inner peripheral surface of the partition wall portion 63f which constitutes the through-hole 63g and an outer peripheral surface of the small-diameter body portion 61b is very small, the refrigerant hardly moves between the low-pressure space S1 and the high-pressure space S2 via the gap. In addition, each of the inner peripheral surface of the partition wall portion 63f and the outer peripheral surface of the small-diameter body portion 61b is a smooth surface having a constant diameter along the axial direction, and both surfaces are slidable relative to each other.

In addition, a communication passage 67 that is linear is formed in the valve body 61 so as to penetrate therethrough on its axis.

The communication passage 67 allows communication between the back-pressure space S3 and the low-pressure space S1. The communication passage 67 of the present embodiment has a small flow passage cross-section E and functions as an orifice, but may have a flow passage cross-section that does not function as an orifice. In addition, the communication passage of the present invention may be configured by internally fitting and fixing a fixed orifice in a through-hole having a relatively large flow passage cross-section.

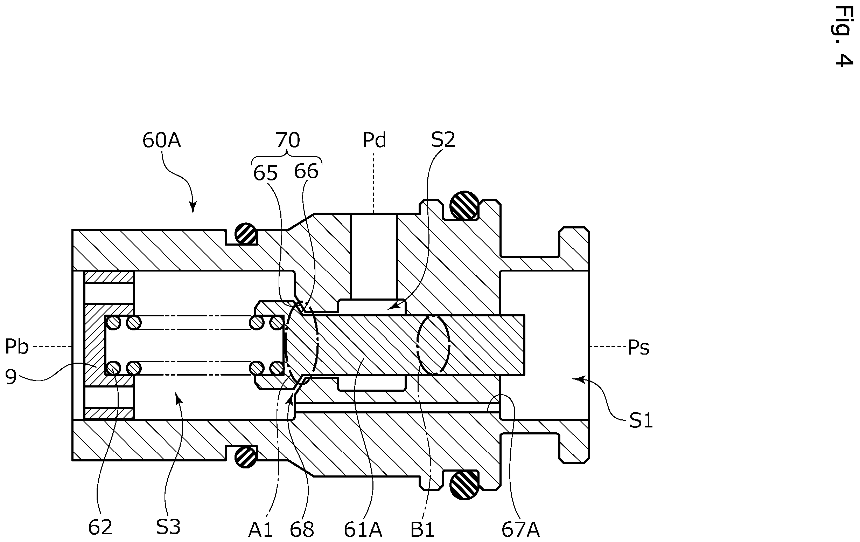

Incidentally, for convenience of description, the communication passage 67 is illustrated in an exaggerated manner in FIGS. 2 and 3. The same applies to each communication passage illustrated in FIG. 4 and subsequent figures. In addition, since it is difficult to indicate the range of the flow passage cross-section E in FIGS. 2 and 3, the reference sign for the flow passage cross-section E is illustrated in parentheses (E) adjacent to the reference sign for the communication passage 67. All the flow passage cross-sections of the communication passages illustrated in FIG. 4 and subsequent figures are the flow passage cross-sections E, and the reference sign for the flow passage cross-section E is omitted.

The valve body 61 is configured such that the pressure of each of the control fluid Pb and the discharge fluid Pd acts on the large-diameter body portion 61a and the pressure of the suction fluid Ps acts on the small-diameter body portion 61b.

An effective pressure-receiving surface serving as the back pressure-receiving surface of the valve body 61 on which the pressure of the control fluid Pb acts is substantially the same as a portion of a flow passage cross-section A1 of the valve seat 65 at the location where the tapered surface 66 is in contact with the valve seat 65 with the tapered surface 66 seated thereon, the portion being located outside the flow passage cross-section E of the communication passage 67. Hereinafter, the effective pressure-receiving surface of the valve body 61 on which the pressure of the control fluid Pb acts is referred to as an "effective pressure-receiving surface (A1 - E)".

An effective pressure-receiving surface serving as the high pressure-receiving surface of the valve body 61 on which the pressure of the discharge fluid Pd acts is substantially the same as a portion of the flow passage cross-section A1 of the valve seat 65, the portion being located outside a cross-section B1 of the small-diameter body portion 61b. Hereinafter, the effective pressure-receiving surface of the valve body 61 on which the pressure of the discharge fluid Pd acts is referred to as an "effective pressure-receiving surface (A1 - B1)".

An effective pressure-receiving surface serving as the low pressure-receiving surface of the valve body 61 on which the pressure of the suction fluid Ps acts is substantially the same as a portion of the cross-section B1 of the small-diameter body portion 61b, the portion being located outside the flow passage cross-section E of the communication passage 67. Hereinafter, the effective pressure-receiving surface of the valve body 61 on which the pressure of the suction fluid Ps acts is referred to as an "effective pressure-receiving surface (B1 - E)".

The coil spring 62 is a compression spring, and is disposed such that a right end portion thereof is fitted into the recess 61c of the valve body 61 and a left end portion thereof is fitted into the recess 9b of the lid member 9. The biasing force of the coil spring 62 can be adjusted by changing the position of the lid member 9 with respect to the housing 60.

Next, the opening and closing operation of the back-pressure control valve V1 will be described. In the housing 60, the suction fluid Ps flows into the low-pressure space S1, the discharge fluid Pd flows into the high-pressure space S2, and the control fluid Pb flows into the back-pressure space S3.

The valve body 61 is pushed to the left in the axial direction by a force (F_{Ps1} = Ps x (B1 -E)) generated due to the pressure of the suction fluid Ps acting on the effective pressure-receiving surface (B1 - E) and a force (F_{Pd1} = Pd x (A1 - B1)) generated due to the pressure of the discharge fluid Pd acting on the effective pressure-receiving surface (A1 - B1) (that is, with a leftward direction defined as positive, a force F₁ = F_{Ps1} + F_{Pd1} acts on the valve body 61).

In addition, the valve body 61 is pushed to the right in the axial direction by a force (F_{Pb1} = Pb x (A1 - E)) generated due to the pressure of the control fluid Pb acting on the effective pressure-receiving surface (A1 - E) and the biasing force (F_{b1}) of the coil spring 62 (that is, with a rightward direction defined as positive, a force F₂ = F_{Pb1} + F_{b1} acts on the valve body 61).

When the force F₁ is equal to or less than the force F₂, the valve body 61 moves to the right in the axial direction and is seated on the valve seat 65 as illustrated in FIG. 3 (F₁ ≤ F₂). That is, the valve 70 becomes closed, in other words, is brought into a closed state.

When the force F₁ is greater than the force F₂, the valve body 61 moves to the left in the axial direction (force F₁ > force F₂). That is, as illustrated in FIG. 2, the valve 70 becomes opened, in other words, is brought into an open state. In addition, the opening degree of the valve 70 increases as the tapered surface 66 of the valve body 61 separates from the valve seat 65.

When the valve 70 is in an open state, the discharge fluid Pd that has flowed into the valve 70 from the high-pressure space S2 is depressurized according to the opening degree of the valve 70, and is supplied to the back-pressure space S3 as the control fluid Pb. The valve 70 is a so-called DB valve.

In addition, the lubricating oil separated by the oil separator 6 passes through the valve 70 together with the refrigerant, and is supplied to the back-pressure space S3.

The control fluid Pb and the lubricating oil that have passed through the valve 70 and have flowed into the back-pressure space S3 are divided into a flow passing through the through-holes 9a and a flow passing through the communication passage 67.

The control fluid Pb and the lubricating oil that have passed through the through-holes 9a are supplied to the back-pressure chamber 50. Accordingly, it is possible to prevent the lubricating oil in the back-pressure chamber 50 from being depleted or excessively reduced (hereinafter, simply referred to as depletion) while increasing the pressure of the control fluid Pb in the back-pressure chamber 50.

In addition, the control fluid Pb that has flowed into the communication passage 67 is depressurized by the throttling action, and is supplied to the low-pressure space S1 as the suction fluid Ps. Accordingly, the pressure of the control fluid Pb is prevented from increasing excessively.

In addition, the lubricating oil that has flowed into the communication passage 67 passes through the communication passage 67 together with the refrigerant, and is supplied to the low-pressure space S1. Accordingly, the lubricating oil can be prevented from being depleted in the low-pressure chamber 20.

When the pressure of the control fluid Pb tends to become excessive and the valve 70 is in a closed state, the control fluid Pb is prevented from being supplied to the back-pressure space S3 through the valve 70. Meanwhile, a portion of the control fluid Pb passes through the communication passage 67, and flows into the low-pressure space S1. Accordingly, the pressure of the control fluid Pb gradually decreases over time.

In addition, even when the valve 70 is in a closed state, the lubricating oil passes through the communication passage 67, and is supplied to the low-pressure chamber 20 together with the refrigerant.

As described above, since the back-pressure control valve V1 of the present embodiment is provided with the communication passage 67 that allows communication between the back-pressure space S3 and the low-pressure space S1, the scroll compressor C can be adjusted by employing the back-pressure control valve V1 that is adjusted in accordance with desired specifications. That is, since it is not necessary to machine the scroll compressor C side, the scroll compressor C can be easily adjusted.

In addition, since the lubricating oil can be supplied from the back-pressure space S3 to the low-pressure space S1 through the communication passage 67 inside the back-pressure control valve V1, the path that the lubricating oil takes to reach the low-pressure chamber 20 after being separated by the oil separator 6 can be shortened, for example, compared to a configuration in which the lubricating oil that has passed through the back-pressure chamber 50 is supplied to the low-pressure chamber 20. Accordingly, the lubricating oil can be prevented from being depleted in the low-pressure chamber 20.

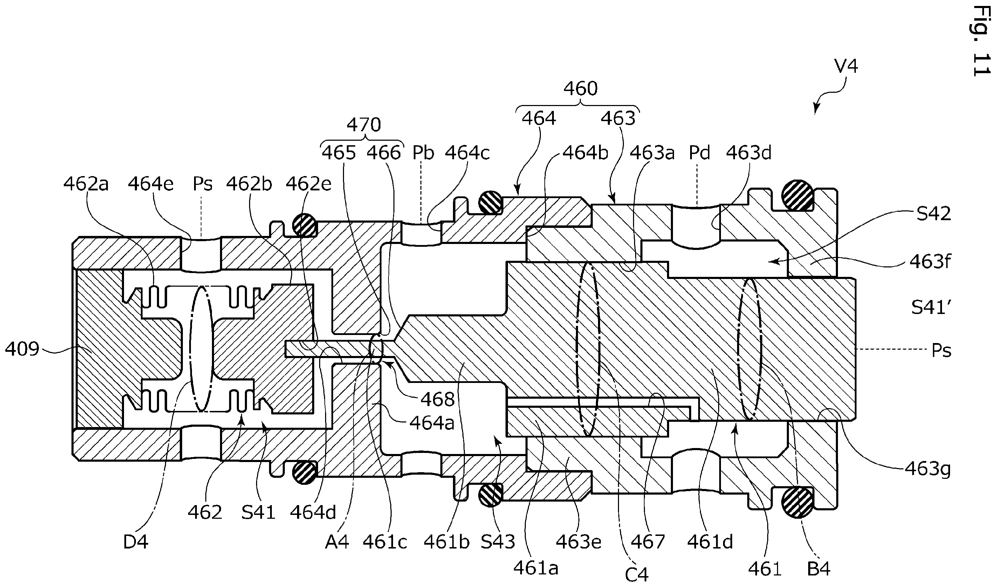

Further, since the back-pressure space S3 and the low-pressure space S1 always communicate with each other through the communication passage 67, the lubricating oil can be supplied from the back-pressure space S3 to the low-pressure space S1 regardless of whether the valve 70 is in an open state or a closed state. Therefore, compared to a configuration in which a valve 470 is provided between a back-pressure space S43 and a low-pressure space S41 as in a fourth embodiment to be described later (see FIG. 11), the lubricating oil can be more reliably prevented from being depleted in the low-pressure chamber 20.

Incidentally, in the present embodiment, the valve 70 has been described as a normally closed DB valve; however, for example, the valve 70 may be configured as a normally open DB valve by employing biasing means for applying a biasing force in an opening direction.

In addition, since the communication passage 67 is a passage penetrating through the valve body 61, it is possible to form the communication passage 67 without machining the scroll compressor C.

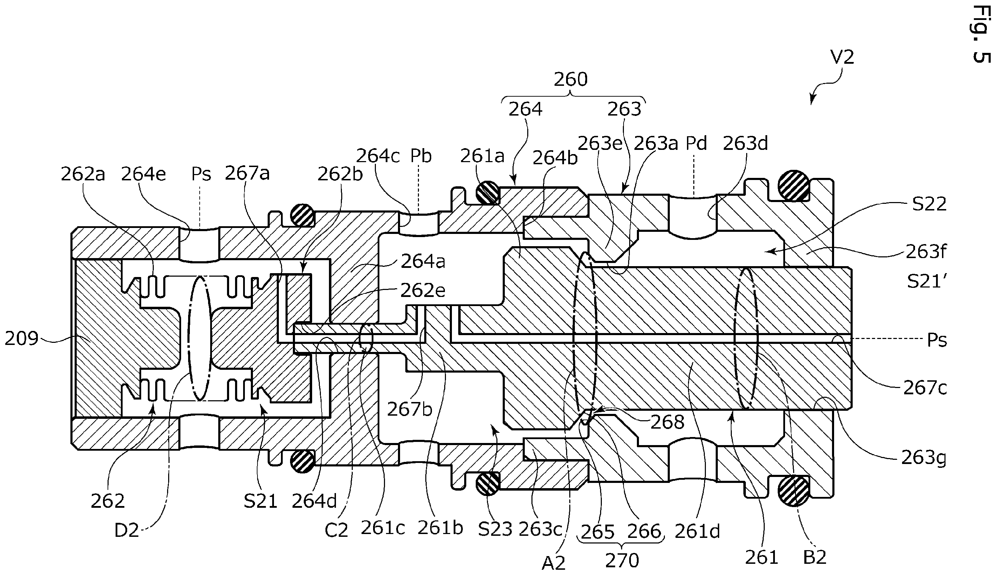

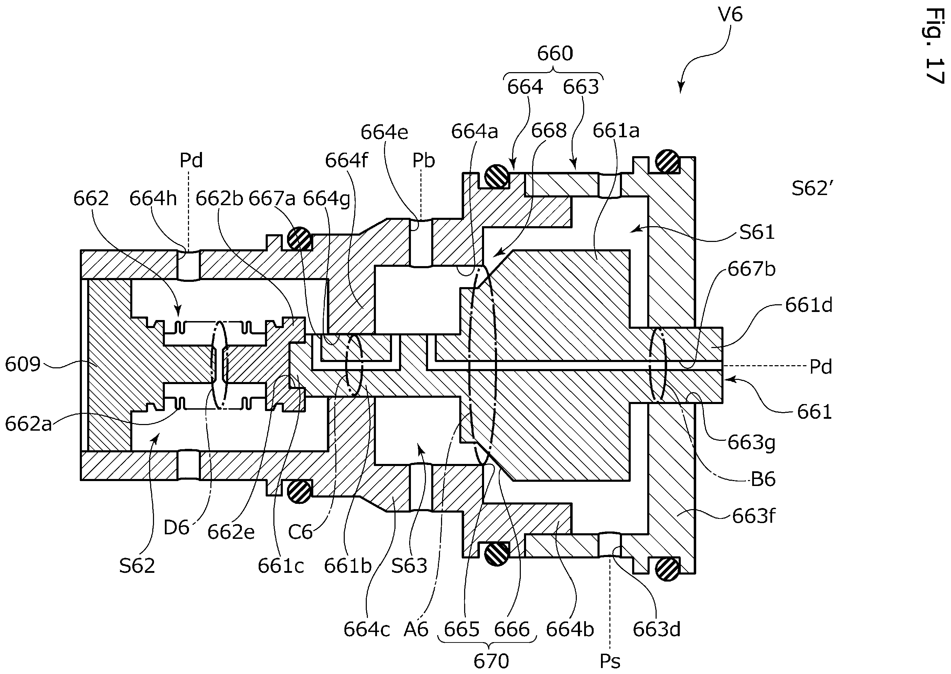

In addition, since the communication passage 67 is linearly formed, the flow passage resistance can be reduced compared to a communication passage 267c formed with an L-shaped cross-section in a second embodiment to be described later (see FIG. 5), a communication passage 667a formed with a U-shaped cross-section in a sixth embodiment to be described later (see FIG. 17), and the like.

In addition, since the communication passage 67 is formed on the axis of the valve body 61, the control fluid Pb or the suction fluid Ps acts on the effective pressure-receiving surface (A1 - E) or the effective pressure-receiving surface (B1 - E) in a well-balanced manner, and therefore, the valve body 61 is less likely to tilt with respect to the housing 60.

In addition, since the back-pressure control valve V1 is configured such that the valve opening degree is adjusted based on the balance between the sum of the force (F_{Pd1}) due to the pressure of the discharge fluid Pd and the force (F_{Ps1}) due to the pressure of the suction fluid Ps and the sum of the force (F_{Pb1}) due to the pressure of the control fluid Pb and the biasing force (F_{b1}) of the coil spring 62, the valve opening degree can be smoothly changed in response to changes in the pressure of the high-pressure chamber 30 and the low-pressure chamber 20, and the pressure in the back-pressure chamber 50 can be instantaneously adjusted.

In addition, since the back-pressure control valve V1 is configured such that the effective pressure-receiving surface (B1 - E) on which the pressure of the suction fluid Ps acts is wider than the effective pressure-receiving surface (A1 - B1) on which the pressure of the discharge fluid Pd acts ((B1 - E) > (A1 - B1)), it is possible to relatively increase the influence of the pressure of the suction fluid Ps while suppressing the influence of the pressure of the discharge fluid Pd having a relatively higher pressure than the suction fluid Ps. According to this configuration, the sudden movement of the valve body 61 caused by a sudden change in the pressure of the discharge fluid Pd can be suppressed.

In addition, since the back-pressure control valve V1 is configured such that the effective pressure-receiving surface (A1 - E) on which the pressure of the control fluid Pb acts is wider than the effective pressure-receiving surface (A1 - B1) on which the pressure of the discharge fluid Pd acts ((A1 - E) > (A1 - B1)), it is possible to relatively increase the influence of the pressure of the control fluid Pb while suppressing the influence of the pressure of the discharge fluid Pd having a relatively higher pressure than the control fluid Pb. According to this configuration, the sudden movement of the valve body 61 caused by a sudden change in the pressure of the discharge fluid Pd can be suppressed.

Incidentally, in the present embodiment, the communication passage 67 has been described as being linearly formed; however, the shape of the communication passage 67 may be changed as appropriate, for example as in the communication passage 267c formed with an L-shaped cross-section in the second embodiment to be described later (see FIG. 5), the communication passage 667a formed with a U-shaped cross-section in the sixth embodiment to be described later (see FIG. 17), and the like.

In addition, the communication passage 67 has been described as being formed on the axis of the valve body 61; however, the communication passage 67 may be formed at a position away from the axis of the valve body 61, may be inclined with respect to the axis of the valve body 61, or may be formed in plurality.

In addition, in the present embodiment, a configuration in which the communication passage 67 is formed in the valve body 61 has been described; however, referring to FIG. 4 illustrating Modification Example 1-1, a communication passage 67A may be formed in a housing 60A, and a valve body 61A in which a communication passage is not formed may be applied. Incidentally, the housing 60A having the communication passage 67A and the valve body 61 having the communication passage 67 may be used in combination.

In more detail, the communication passage 67A penetrates through the housing 60A linearly in the axial direction from a side surface that partitions the low-pressure space S1 to a wall surface that partitions the back-pressure space S3.

Hereinafter, forces acting on the valve body 61A will be described. An effective pressure-receiving surface serving as the back pressure-receiving surface of the valve body 61A on which the pressure of the control fluid Pb acts is A1.

An effective pressure-receiving surface serving as the high pressure-receiving surface of the valve body 61A on which the pressure of the discharge fluid Pd acts is (A1 - B1).

An effective pressure-receiving surface serving as the low pressure-receiving surface of the valve body 61A on which the pressure of the suction fluid Ps acts is B1.

The valve body 61A is pushed to the left in the axial direction by a force (F_{Pd1} = Pd x (A1 - B1)) generated due to the pressure of the discharge fluid Pd acting on the effective pressure-receiving surface (A1 - B1) and a force (F_{Ps11} = Ps x B1) generated due to the pressure of the suction fluid Ps acting on the effective pressure-receiving surface B1 (that is, with the leftward direction defined as positive, a force F₁₁ = F_{Ps11} + F_{Pd1} acts on the valve body 61A).

In addition, the valve body 61A is pushed to the right in the axial direction by a force (F_{Pb11} = Pb x A1) generated due to the pressure of the control fluid Pb acting on the effective pressure-receiving surface A1 and the biasing force (F_{b1}) of the coil spring 62 (that is, with the rightward direction defined as positive, a force F₁₂ = F_{Pb11} + F_{b1} acts on the valve body 61A).

Even with such a configuration, it is possible to form the communication passage 67A without machining the scroll compressor C.

In addition, by forming the communication passage 67A in the housing 60A and omitting a communication passage in the valve body 61A, the forces generated due to the fluid pressures acting on the respective pressure-receiving surfaces of the valve body 61A can be easily balanced. That is, the valve body 61A can be moved easily and more stably.

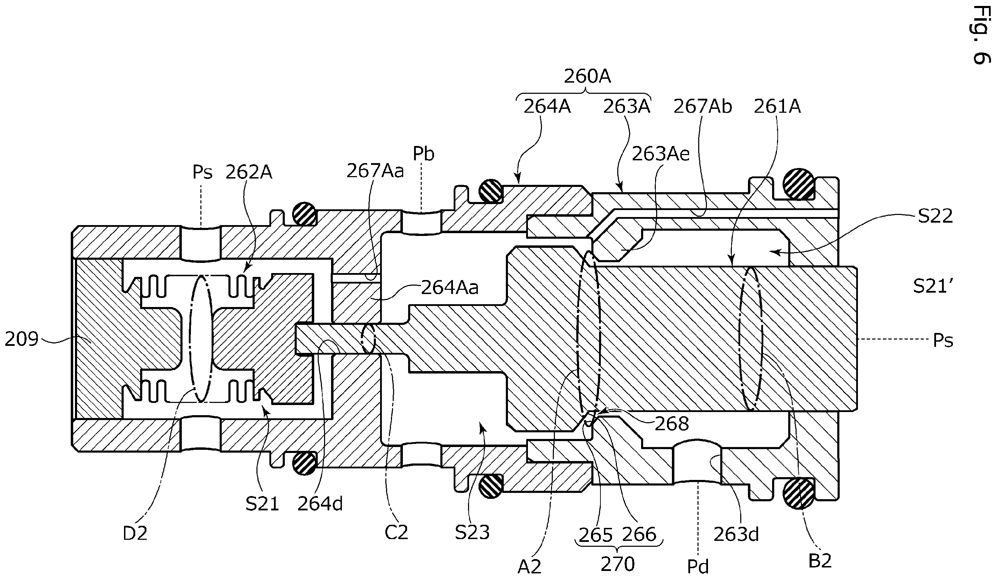

Incidentally, even when the communication passage is formed in the housing, the shape of the communication passage is not limited to being linear, and may be changed as appropriate. For example, the communication passage may have a shape such as that of a communication passage 267Ab formed with a vertically inverted L-shaped cross-section in Modification Example 2-1 of the second embodiment to be described later (see FIG. 6).

In addition, even when the communication passage is formed in the housing, the number or disposition of the communication passages may be changed as appropriate.

### {Second embodiment}

Next, a valve according to the second embodiment will be described with reference to FIGS. 5 to 7. Incidentally, the description of configurations that are the same as and overlap with the configurations of the first embodiment will be omitted.

As illustrated in FIG. 5, a back-pressure control valve V2 of the second embodiment is a normally closed valve that is mainly composed of a housing 260, a valve body 261, and a pressure-sensitive body 262.

The housing 260 partitions two low-pressure spaces S21 and S21' communicating with the low-pressure chamber 20, a high-pressure space S22 communicating with the high-pressure chamber 30, and a back-pressure space S23 communicating with the back-pressure chamber 50. Incidentally, the housing 260 may at least partially partition the low-pressure spaces S21 and S21', the high-pressure space S22, and the back-pressure space S23.

The housing 260 is composed of a first divided body 263 having a tubular shape and a second divided body 264 having a tubular shape.

A partition wall portion 263e having a valve hole 263a and a valve seat 265 is formed on the left side in the axial direction of the first divided body 263. The valve seat 265, together with a tapered surface 266 of the valve body 261, constitutes a valve 270 that controls the opening and closing of a flow passage 268 between the valve seat 265 and the tapered surface 266.

A partition wall portion 263f having a through-hole 263g is formed at a right end of the first divided body 263.

A space sandwiched between the partition wall portions 263e and 263f in the axial direction is the high-pressure space S22. The high-pressure space S22 communicates with the high-pressure chamber 30 through a communication hole 263d formed in the first divided body 263.

In addition, a space to the right in the axial direction of the partition wall portion 263f serves as the other low-pressure space S21' into which the suction fluid Ps flows. Specifically, the other low-pressure space S21' is partitioned by the partition wall portion 263f and a recess for installing the back-pressure control valve V2, which is provided in the fixed scroll 41.

An annular protrusion 263c protruding to the left in the axial direction is formed on the first divided body 263. The annular protrusion 263c is fitted and fixed to an annular step portion 264b provided in a right end opening portion of the second divided body 264.

A partition wall portion 264a having a through-hole 264d is formed in an axial center portion of the second divided body 264.

A space sandwiched between the partition wall portion 264a of the second divided body 264 and the partition wall portion 263e of the first divided body 263 is the back-pressure space S23. The back-pressure space S23 communicates with the back-pressure chamber 50 through a communication hole 264c formed in the second divided body 264.

A lid member 209 is attached to an inner peripheral surface of a left end opening portion of the second divided body 264 in a sealed manner by screwing.

A space sandwiched between the partition wall portion 264a of the second divided body 264 and the lid member 209 in the axial direction is one low-pressure space S21. The low-pressure space S21 communicates with the low-pressure chamber 20 through a communication hole 264e formed in the second divided body 264.

The pressure-sensitive body 262 is disposed between the lid member 209 and the valve body 261.

The pressure-sensitive body 262 is a bellows which is composed of a body portion 262a made of metal and having a bellows shape and a closing portion 262b that closes an opening at an axial right end of the body portion 262a, and the inside of which is maintained in vacuum. The body portion 262a also functions as biasing means for biasing the valve body 261 in the closing direction. Separately, a compression spring serving as biasing means may be disposed between the lid member 209 and the closing portion 262b. An opening at an axial left end of the body portion 262a is closed by the lid member 209.

A recess 262e and a communication passage 267a are formed in the closing portion 262b. The recess 262e is recessed from a right end surface of the closing portion 262b to the left in the axial direction, and is open to the right in the axial direction.

The communication passage 267a is formed with an L-shaped cross-section, extends from an outer peripheral surface of the closing portion 262b toward the inner-diameter side, and then extends substantially orthogonally rightward in the axial direction at the radial center of the closing portion 262b. The communication passage 267a communicates with the low-pressure space S21 and the recess 262e.

The valve body 261 includes a large-diameter body portion 261a; a medium-diameter body portion 261b extending from the large-diameter body portion 261a to the left in the axial direction; a small-diameter body portion 261c having a small diameter and protruding from the medium-diameter body portion 261b to the left in the axial direction; and an extending shaft portion 261d extending from the large-diameter body portion 261a to the right in the axial direction.

The tapered surface 266 that is reduced in diameter as the tapered surface 266 extends toward the right in the axial direction is formed on the large-diameter body portion 261a. The large-diameter body portion 261a is disposed in the back-pressure space S23.

The medium-diameter body portion 261b is disposed in the back-pressure space S23.

The small-diameter body portion 261c is inserted through the through-hole 264d from the back-pressure space S23 side, and a tip portion of the small-diameter body portion 261c is fitted and connected to the recess 262e of the closing portion 262b in the low-pressure space S21 in a sealed manner. Incidentally, the small-diameter body portion 261c may be fitted and connected to the recess 262e of the closing portion 262b with a gap therebetween rather than being fitted and connected in a sealed manner.

Since a gap between an inner peripheral surface of the partition wall portion 264a which constitutes the through-hole 264d and an outer peripheral surface of the small-diameter body portion 261c is very small, the refrigerant hardly moves between the back-pressure space S23 and the low-pressure space S21 via the gap. In addition, each of the inner peripheral surface of the partition wall portion 264a and the outer peripheral surface of the small-diameter body portion 261c is a smooth surface having a constant diameter along the axial direction, and both surfaces are slidable relative to each other.

The extending shaft portion 261d is inserted through the through-hole 263g. The extending shaft portion 261d has a larger diameter than the medium-diameter body portion 261b.

Since a gap between an inner peripheral surface of the partition wall portion 263f which constitutes the through-hole 263g and an outer peripheral surface of the extending shaft portion 261d is very small, the refrigerant hardly moves between the high-pressure space S22 and the low-pressure space S21' via the gap. In addition, each of the inner peripheral surface of the partition wall portion 263f and the outer peripheral surface of the extending shaft portion 261d is a smooth surface having a constant diameter along the axial direction, and both surfaces are slidable relative to each other.

In addition, communication passages 267b and 267c are formed in the valve body 261.

The communication passage 267b is formed with a laterally reversed L-shaped cross-section, extends from a left end surface of the small-diameter body portion 261c to the right in the axial direction, and then extends substantially orthogonally outward in the radial direction on the left side of the medium-diameter body portion 261b. The communication passage 267b is formed so as to always communicate with the back-pressure space S23 within the movement range of the valve body 261.

In addition, the communication passage 267b also communicates with the recess 262e of the pressure-sensitive body 262. That is, the communication passage 267b communicates with the communication passage 267a of the pressure-sensitive body 262.

The communication passage 267c is formed with an L-shaped cross-section, extends from a right end surface of the extending shaft portion 261d toward the left in the axial direction, and then extends substantially orthogonally outward in the radial direction at the axial center of the medium-diameter body portion 261b.

The communication passage 267c is formed so as to always communicate with the low-pressure space S21' and the back-pressure space S23 within the movement range of the valve body 261.

The valve body 261 is configured such that the pressure of each of the control fluid Pb and the discharge fluid Pd acts on the large-diameter body portion 261a, the pressure of the control fluid Pb acts on the medium-diameter body portion 261b, and the pressure of the suction fluid Ps acts on the extending shaft portion 261d.

An effective pressure-receiving surface serving as the back pressure-receiving surface of the valve body 261 on which the pressure of the control fluid Pb acts is substantially the same as an area (A2 - C2) obtained by subtracting a portion (C2 - E) of a cross-section C2 of the small-diameter body portion 261c, the portion being located outside the flow passage cross-section E of the communication passage 267b, from a portion (A2 - E) of a flow passage cross-section A2 of the valve seat 265 at the location where the tapered surface 266 is in contact with the valve seat 265 with the tapered surface 266 seated thereon, the portion being located outside the flow passage cross-section E of the communication passage 267c. Hereinafter, the effective pressure-receiving surface of the valve body 261 on which the pressure of the control fluid Pb acts is referred to as an "effective pressure-receiving surface (A2 - C2)".

An effective pressure-receiving surface serving as the high pressure-receiving surface of the valve body 261 on which the pressure of the discharge fluid Pd acts is substantially the same as an area (A2 - B2) obtained by subtracting a portion (B2 - E) of a cross-section B2 of the extending shaft portion 261d, the portion being located outside the flow passage cross-section E of the communication passage 267c, from a portion (A2 - E) of the flow passage cross-section A2 of the valve seat 265, the portion being located outside the flow passage cross-section E of the communication passage 267c. Hereinafter, the effective pressure-receiving surface of the valve body 261 on which the pressure of the discharge fluid Pd acts is referred to as an "effective pressure-receiving surface (A2 - B2)".

The cross-section B2 of the extending shaft portion 261d is larger in diameter and wider than the cross-section C2 of the small-diameter body portion 261c (B2 > C2). Therefore, the effective pressure-receiving surface (A2 - C2) is wider than the effective pressure-receiving surface (A2 - B2) ((A2 - C2) > (A2 - B2)).

An effective pressure-receiving surface serving as the low pressure-receiving surface of the valve body 261 on which the pressure of the suction fluid Ps acts is substantially the same as a portion (B2 - E) of the cross-section B2 of the extending shaft portion 261d, the portion being located outside the flow passage cross-section E of the communication passage 267c. Hereinafter, the effective pressure-receiving surface of the valve body 261 on which the pressure of the suction fluid Ps acts is referred to as an "effective pressure-receiving surface (B2 - E)".

In addition, regardless of whether the valve 270 is in an open state or a closed state, the closing portion 262b of the pressure-sensitive body 262 is disposed at a position that is spaced apart from the partition wall portion 264a to the left in the axial direction. That is, the pressure of the suction fluid Ps in the low-pressure space S21 always acts on the pressure-sensitive body 262 toward the left in the axial direction.

An effective pressure-receiving surface serving as the low pressure-receiving surface of the pressure-sensitive body 262 on which the pressure of the suction fluid Ps acts is substantially the same as an area (D2 - C2) obtained by subtracting a portion (C2 - E) of the cross-section C2 of the small-diameter body portion 261c, the portion being located outside the communication passage 267b, from a portion (D2 - E) of an effective pressure-receiving surface D2 of the pressure-sensitive body 262, the portion being located outside the flow passage cross-section E of the communication passage 267a. Hereinafter, the effective pressure-receiving surface of the pressure-sensitive body 262 on which the pressure of the suction fluid Ps acts is referred to as an "effective pressure-receiving surface (D2 - C2)".

Incidentally, in this specification, since the inside of the pressure-sensitive body 262 is in vacuum as described above, it is assumed that there is no influence.

Next, the opening and closing operation of the back-pressure control valve V2 will be described. In the housing 260, the suction fluid Ps flows into the low-pressure spaces S21 and S21', the discharge fluid Pd flows into the high-pressure space S22, and the control fluid Pb flows into the back-pressure space S23.

The valve body 261 is pushed to the left in the axial direction by a force (F_{Ps21} = Ps x (B2 - E)) generated due to the pressure of the suction fluid Ps acting on the effective pressure-receiving surface (B2 - E), a force (F_{Pd2} = Pd x (A2 - B2)) generated due to the pressure of the discharge fluid Pd acting on the effective pressure-receiving surface (A2 - B2), and a force (F_{Ps22} = Ps x (D2 - C2)) generated due to the pressure of the suction fluid Ps acting on the effective pressure-receiving surface (D2 - C2) (that is, with the leftward direction defined as positive, a force F₂₁ = F_{Ps21} + F_{Pd2} + F_{Ps22} acts on the valve body 261).

In addition, the valve body 261 is pushed to the right in the axial direction by a force (F_{Pb2} = Pb x (A2 - C2)) generated due to the pressure of the control fluid Pb acting on the effective pressure-receiving surface (A2 - C2) and the biasing force (F_{b2}) of the pressure-sensitive body 262 (that is, with the rightward direction defined as positive, a force F₂₂ = F_{Pb2} + F_{b2} acts on the valve body 261).

When the force F₂₁ is equal to or less than the force F₂₂, the valve body 261 moves to the right in the axial direction and is seated on the valve seat 265 (F₂₁ ≤ F₂₂). That is, the valve 270 is brought into a closed state. In addition, the closing portion 262b of the pressure-sensitive body 262 moves to the right in the axial direction together with the valve body 261 while the body portion 262a extends.

When the force F₂₁ is greater than the force F₂₂, the valve body 261 moves to the left in the axial direction (force F₂₁ > force F₂₂). That is, the valve 270 is brought into an open state. The opening degree of the valve 270 increases as the tapered surface 266 of the valve body 261 separates from the valve seat 265. In addition, the closing portion 262b of the pressure-sensitive body 262 moves to the left in the axial direction together with the valve body 261 while contracting the body portion 262a.

When the valve 270 is in an open state, the discharge fluid Pd that has flowed into the valve 270 from the high-pressure space S22 is depressurized according to the opening degree of the valve 270, and is supplied to the back-pressure space S23 as the control fluid Pb.

The control fluid Pb that has passed through the valve 270 and has flowed into the back-pressure space S23 is divided into a flow passing through the communication hole 264c, a flow passing through the communication passages 267a and 267b, and a flow passing through the communication passage 267c.

The control fluid Pb that has passed through the communication hole 264c is supplied to the back-pressure chamber 50. Accordingly, the pressure of the control fluid Pb in the back-pressure chamber 50 can be increased.

In addition, the control fluid Pb that has flowed into the communication passages 267a and 267b is depressurized by the throttling action, and is supplied to the one low-pressure space S21 as the suction fluid Ps. Similarly, the control fluid Pb that has flowed into the communication passage 267c is depressurized by the throttling action, and is supplied to the other low-pressure space S21' as the suction fluid Ps.

When the valve 270 is in a closed state, the control fluid Pb is prevented from being supplied to the back-pressure space S23. Meanwhile, a portion of the control fluid Pb not only passes through the communication passages 267a and 267b and flows into the one low-pressure space S21, but also passes through the communication passage 267c and flows into the other low-pressure space S21'. Accordingly, the pressure of the control fluid Pb can be reduced in a shorter time than in the first embodiment.

As described above, since the back-pressure control valve V2 of the present embodiment is provided with the communication passages 267a and 267b that allow communication between the back-pressure space S23 and the one low-pressure space S21, and the communication passage 267c that allows communication between the back-pressure space S23 and the other low-pressure space S21', the scroll compressor C can be adjusted by employing the back-pressure control valve V2 that is adjusted in accordance with desired specifications. That is, since it is not necessary to machine the scroll compressor C side, the scroll compressor C can be easily adjusted.

In addition, the back-pressure control valve V2 is configured such that the low-pressure spaces S21 and S21' are provided at both axial ends of the housing 260 and the pressure of the suction fluid Ps acts on each of the valve body 261 and the pressure-sensitive body 262. According to this configuration, the back-pressure control valve V2 allows the valve body 261 to be easily separated from the valve seat 265.

Incidentally, at least one of the communication passages 267a and 267b and the communication passage 267c may be formed.

In addition, in the present embodiment, a configuration in which the communication passages 267b and 267a and the communication passage 267c are formed in the valve body 261 has been described; however, referring to FIG. 6 illustrating Modification Example 2-1, communication passages 267Aa and 267Ab may be formed in a housing 260A, and a valve body 261A in which a communication passage is not formed and a pressure-sensitive body 262A may be applied.

In more detail, the communication passage 267Aa penetrates axially through a partition wall portion 264Aa of a second divided body 264A on the outer-diameter side of the through-hole 264d. The communication passage 267Aa communicates with the back-pressure space S23 and the one low-pressure space S21.

The communication passage 267Ab extends from a right end surface of a peripheral wall of a first divided body 263A to the left in the axial direction, and then extends to the left in the axial direction while being inclined to the inner-diameter side at the axial center of a partition wall portion 263Ae. The communication passage 267Ab is formed at a position where the phase thereof is different from that of the communication hole 263d in a circumferential direction. The communication passage 267Ab communicates with the back-pressure space S23 and the other low-pressure space S21'.

Hereinafter, forces acting on the valve body 261A will be described. An effective pressure-receiving surface serving as the back pressure-receiving surface of the valve body 261A on which the pressure of the control fluid Pb acts is (A2 - C2).

An effective pressure-receiving surface serving as the high pressure-receiving surface of the valve body 261A on which the pressure of the discharge fluid Pd acts is (A2 - B2).

An effective pressure-receiving surface serving as the low pressure-receiving surface of the valve body 261A on which the pressure of the suction fluid Ps acts is B2. In addition, an effective pressure-receiving surface serving as the low pressure-receiving surface of the pressure-sensitive body 262A on which the pressure of the suction fluid Ps acts is (D2 - C2).

The valve body 261A is pushed to the left in the axial direction by a force (F_{Pd2} = Pd x (A2 - B2)) generated due to the pressure of the discharge fluid Pd acting on the effective pressure-receiving surface (A2 - B2), a force (F_{Ps22} = Ps x (D2 - C2)) generated due to the pressure of the suction fluid Ps acting on the effective pressure-receiving surface (D2 - C2), and a force (F_{Ps23} = Ps x B2) generated due to the pressure of the suction fluid Ps acting on the effective pressure-receiving surface B2 (that is, with the leftward direction defined as positive, a force F₂₃ = F_{Pd2} + F_{Ps22} + F_{Ps23} acts on the valve body 261A).

In addition, the valve body 261A is pushed to the right in the axial direction by a force (F_{Pb2} = Pb x (A2 - C2)) generated due to the pressure of the control fluid Pb acting on the effective pressure-receiving surface (A2 - C2) and the biasing force (F_{b2}) of the pressure-sensitive body 262 (that is, with the rightward direction defined as positive, the force F₂₂ = F_{Pb2} + F_{b2} acts on the valve body 261A).

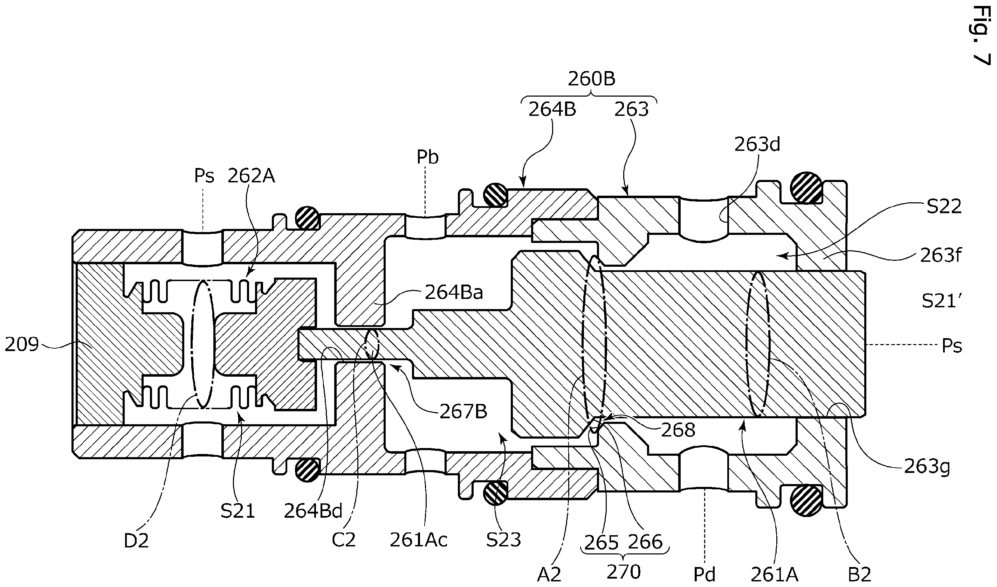

In addition, referring to FIG. 7 illustrating another Modification Example 2-2, a clearance may be provided between a second divided body 264B of a housing 260B and the valve body 261A, and the clearance may serve as a communication passage 267B that always communicates with the back-pressure space S23 and the one low-pressure space S21 that are adjacent thereto. It is preferable that the flow passage cross-section of the communication passage 267B is a flow passage cross-section having the same throttling effect as that of the communication passage described in the first embodiment and the like. The housing 260B, the pressure-sensitive body 262 having the communication passage 267a, and the valve body 261 having the communication passages 267b and 267c may be used in combination.

In more detail, a diameter of a through-hole 264Bd of the second divided body 264B, that is, an inner diameter of a partition wall portion 264Ba is slightly larger than a diameter of a small-diameter body portion 261Ac of the valve body 261A. Accordingly, a clearance between an inner peripheral surface of the partition wall portion 264Ba and an outer peripheral surface of the small-diameter body portion 261Ac, that is, a radial gap is ensured.

Incidentally, forces acting on the valve body 261A are substantially the same as those in Modification Example 2-1.

In the case of such a configuration, it is possible to configure the communication passage 267B in a simple manner without machining the scroll compressor C.

In addition, it is possible to configure the communication passage 267B in a simple manner without performing machining such as drilling a communication passage in the housing 260B or the valve body 261A.

In addition, since the valve body 261A is fixed to a pressure-sensitive body 262A and moves while being in sliding contact with the partition wall portion 263f, the valve body 261A is prevented from tilting with respect to the housing 260B. Therefore, the communication passage 267B can be more reliably configured.

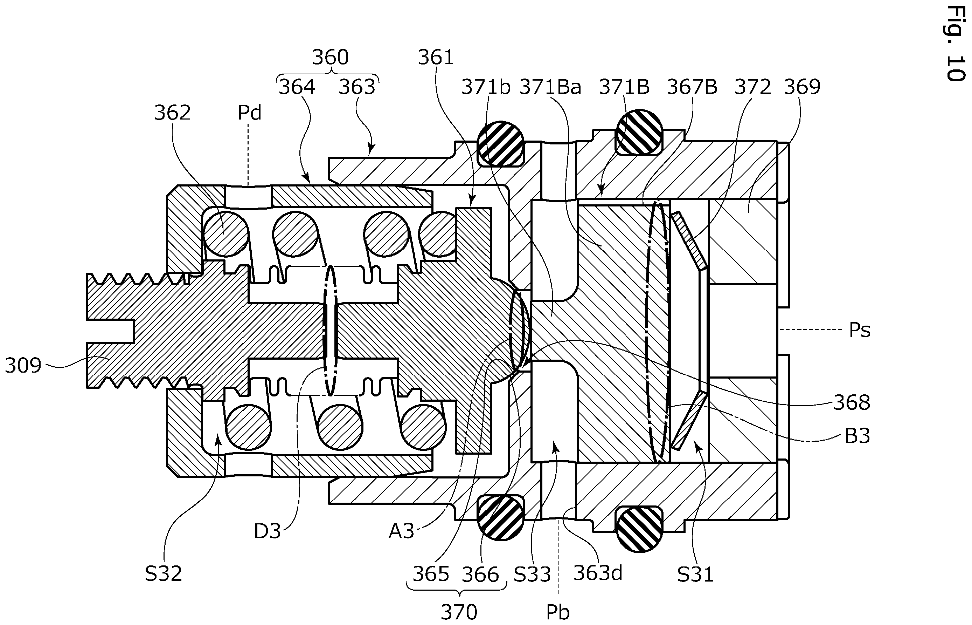

Incidentally, the diameter of the through-hole 264Bd has been described as being slightly larger than the diameter of the small-diameter body portion 261Ac; however, the present invention is not limited thereto, and the configuration for ensuring a clearance may be changed as appropriate. For example, as in a communication passage 367B of Modification Example 3-2 of a third embodiment to be described later (see FIG. 10), by forming a groove in at least one of a small-diameter body portion of a valve body and a partition wall portion of a second divided body, the groove being open toward the mating side and communicating with each of the low-pressure space S21 and the back-pressure space S23, a communication passage may be formed between a housing and the valve body.

### {Third embodiment}

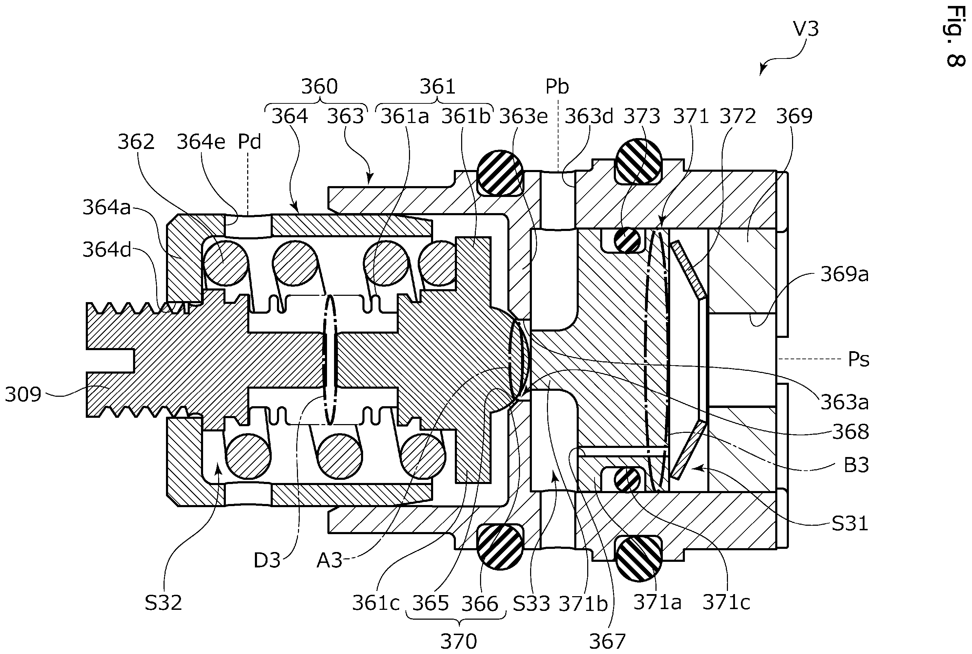

Next, a valve according to the third embodiment will be described with reference to FIGS. 8 to 10. Incidentally, the description of configurations that are the same as and overlap with the configurations of the first embodiment will be omitted.

As illustrated in FIG. 8, a back-pressure control valve V3 of the third embodiment is a normally closed valve that is mainly composed of a housing 360, a pressure-sensitive body 361 including a closing portion 361b serving as a valve body, a coil spring 362, a pressure-driven body 371 serving as a valve body, and a disk spring 372 serving as biasing means for biasing the pressure drive body 371 in the opening direction.

The housing 360 includes a low-pressure space S31 communicating with the low-pressure chamber 20; a high-pressure space S32 communicating with the high-pressure chamber 30; and a back-pressure space S33 communicating with the back-pressure chamber 50. Incidentally, the housing 360 may at least partially partition the low-pressure space S31, the high-pressure space S32, and the back-pressure space S33.

The housing 360 is composed of a first divided body 363 having a tubular shape and a second divided body 364 having a tubular shape.

A partition wall portion 363e having a valve hole 363a and a valve seat 365 is formed in an axial center portion of the first divided body 363. The valve seat 365, together with a curved surface 366 of the pressure-sensitive body 361, constitutes a valve 370 that controls the opening and closing of a flow passage 368 between the valve seat 365 and the curved surface 366.

A lid member 369 having a through-hole 369a is attached to a right end opening portion of the first divided body 363 by screwing.

In the first divided body 363, the pressure-driven body 371 and the disk spring 372 are disposed in order from the left in a space sandwiched between the partition wall portion 363e and the lid member 369 in the axial direction.

The pressure-driven body 371 includes a large-diameter body portion 371a having a columnar shape, and a small-diameter body portion 371b having a small diameter and protruding from a center portion of a left end surface of the large-diameter body portion 371a to the left in the axial direction.

An annular groove 371c that is recessed from an axial center portion of an outer peripheral surface of the large-diameter body portion 371a to the inner-diameter side and that is open to the outer-diameter side is formed in the large-diameter body portion 371a.

An O-ring 373 serving as sealing means is disposed in the annular groove 371c. The O-ring 373 seals a gap between the pressure-driven body 371 and a peripheral wall of the first divided body 363 while allowing the pressure-driven body 371 to move in the axial direction.

The large-diameter body portion 371a and the O-ring 373 partition a space, which is sandwiched between the partition wall portion 363e and the lid member 369 in the axial direction, into the back-pressure space S33 and the low-pressure space S31.

The back-pressure space S33 is a space to the left of the large-diameter body portion 371a, that is, on the partition wall portion 363e side, and communicates with the back-pressure chamber 50 through a communication hole 363d formed in the first divided body 363.

The low-pressure space S31 is a space to the right of the large-diameter body portion 371a, that is, on the lid member 369 side, and communicates with the low-pressure chamber 20 through the through-hole 369a.

In addition, a communication passage 367 is formed in the large-diameter body portion 371a so as to penetrate axially therethrough on the outer-diameter side of the small-diameter body portion 371b. The communication passage 367 communicates with the back-pressure space S33 and the low-pressure space S31.

A left end surface of the small-diameter body portion 371b is a flat surface.

The disk spring 372 is disposed in a compressed state between the large-diameter body portion 371a of the pressure-driven body 371 and the lid member 369 in the axial direction.

The second divided body 364 is internally fitted and fixed to an axially left-side opening portion of the first divided body 363.

A partition wall portion 364a having a through-hole 364d is formed at a left end of the second divided body 364.

A space sandwiched between the partition wall portion 364a of the second divided body 364 and the partition wall portion 363e of the first divided body 363 in the axial direction is the high-pressure space S32. The high-pressure space S32 communicates with the high-pressure chamber 30 through a communication hole 364e formed in the second divided body 364.

A lid member 309 is attached in a sealed manner by being screwed into the through-hole 364d of the partition wall portion 364a.

The pressure-sensitive body 361 is a bellows which is composed of a body portion 361a and the closing portion 361b serving as a valve body, and the inside of which is maintained in vacuum. The pressure-sensitive body 361 can generate almost no biasing force, but may be configured to generate a biasing force in the closing direction of the valve 370. In the case of such a configuration, the coil spring 362 may be omitted.

The closing portion 361b includes a disk portion 361c having a disk shape and projecting to the outer-diameter side. The coil spring 362 externally fitted to the body portion 361a is disposed in a compressed state between the disk portion 361c and the partition wall portion 364a of the second divided body 364.

In addition, a protrusion having a hemispherical shape and protruding to the right in the axial direction is formed on a center portion of a right end surface of the disk portion 361c. An end surface of the protrusion is formed as the curved surface 366 having a spherical shape.

The curved surface 366 of the pressure-sensitive body 361 and a left end surface of the small-diameter body portion 371b of the pressure-driven body 371 maintain a state of abutment against each other due to the biasing force of the coil spring 362 and the biasing force of the disk spring 372.

Each of the control fluid Pb and the discharge fluid Pd acts on the pressure-sensitive body 361.

An effective pressure-receiving surface serving as the back pressure-receiving surface of the pressure-sensitive body 361 on which the pressure of the control fluid Pb acts is substantially the same as a portion of a flow passage cross-section A3 of the valve seat 365 at the location where the curved surface 366 is in contact with the valve seat 365 with the curved surface 366 seated thereon, the portion being located on the outer-diameter side of the location where the left end surface of the small-diameter body portion 371b of the pressure-driven body 371 abuts against the curved surface 366. Since the contact between the curved surface 366 and the left end surface of the small-diameter body portion 371b is a point contact, it is assumed that there is no influence on the effective pressure-receiving surface. Hereinafter, the effective pressure-receiving surface of the pressure-sensitive body 361 on which the pressure of the control fluid Pb acts is referred to as an "effective pressure-receiving surface A3".

An effective pressure-receiving surface serving as the high pressure-receiving surface of the pressure-sensitive body 361 on which the pressure of the discharge fluid Pd acts is substantially the same as a portion of an effective pressure-receiving surface D3 of the pressure-sensitive body 361, the portion being located outside the flow passage cross-section A3 of the valve seat 365. Hereinafter, the effective pressure-receiving surface of the pressure-sensitive body 361 on which the pressure of the discharge fluid Pd acts is referred to as an "effective pressure-receiving surface (D3 - A3)".

Each of the control fluid Pb and the suction fluid Ps acts on the pressure-driven body 371.

An effective pressure-receiving surface serving as the back pressure-receiving surface of the pressure-driven body 371 on which the pressure of the control fluid Pb acts is substantially the same as a portion (B3 - E) of a cross-section B3 of a maximum outer-diameter portion of the large-diameter body portion 371a, the portion being located outside the flow passage cross-section E of the communication passage 367. Hereinafter, the effective pressure-receiving surface of the pressure-driven body 371 on which the pressure of the control fluid Pb acts is referred to as an "effective pressure-receiving surface B3b".

An effective pressure-receiving surface serving as the low pressure-receiving surface of the pressure-driven body 371 on which the pressure of the suction fluid Ps acts is substantially the same as the portion (B3 - E) of the cross-section B3 of the large-diameter body portion 371a, the portion being located outside the flow passage cross-section E of the communication passage 367. Hereinafter, the effective pressure-receiving surface of the pressure-driven body 371 on which the pressure of the suction fluid Ps acts is referred to as an "effective pressure-receiving surface B3s".

Next, the opening and closing operation of the back-pressure control valve V3 will be described. In the housing 360, the suction fluid Ps flows into the low-pressure space S31, the discharge fluid Pd flows into the high-pressure space S32, and the control fluid Pb flows into the back-pressure space S33.

The closing portion 361b of the pressure-sensitive body 361 is pushed to the left in the axial direction by a force (F_{Pb31} = Pb x A3) generated due to the pressure of the control fluid Pb acting on the effective pressure-receiving surface A3, a force (F_{Pd3} = Pd x (D3 - A3)) generated due to the pressure of the discharge fluid Pd acting on the effective pressure-receiving surface (D3 - A3), a force (F_{Ps3} = Ps x B3s) generated due to the pressure of the suction fluid Ps acting on the effective pressure-receiving surface B3s, and the biasing force (F_{b32}) of the disk spring 372 (that is, with the leftward direction defined as positive, a force F₃₁ = F_{Pb31} + F_{Pd3} + F_{Ps3} + F_{b32} acts on the pressure-sensitive body 361).

In addition, the closing portion 361b of the pressure-sensitive body 361 is pushed to the right in the axial direction by a force (F_{Pb32} = Pb x B3b) generated due to the pressure of the control fluid Pb acting on the effective pressure-receiving surface B3b and the biasing force (F_{b31}) of the coil spring 362 (that is, with the rightward direction defined as positive, a force F₃₂ = F_{Pb32} + F_{b31} acts on the pressure-sensitive body 361).

When the force F₃₁ is equal to or less than the force F₃₂, the closing portion 361b of the pressure-sensitive body 361 moves to the right in the axial direction and is seated on the valve seat 365 while the body portion 361a extends (F₃₁ ≤ F₃₂). That is, the valve 370 is brought into a closed state. In addition, the pressure-driven body 371 moves to the right in the axial direction together with the pressure-sensitive body 361.

When the force F₃₁ is greater than the force F₃₂, the closing portion 361b of the pressure-sensitive body 361 moves to the left in the axial direction while contracting the body portion 361a (F₃₁ > F₃₂). That is, the valve 370 is brought into an open state. In addition, the opening degree of the valve 370 increases as the curved surface 366 of the pressure-sensitive body 361 separates from the valve seat 365. In addition, the pressure-driven body 371 moves to the left in the axial direction together with the pressure-sensitive body 361.

When the valve 370 is in an open state, the discharge fluid Pd that has flowed into the valve 370 from the high-pressure space S32 is depressurized according to the opening degree of the valve 370, and is supplied to the back-pressure space S33 as the control fluid Pb.

The control fluid Pb that has passed through the valve 370 and has flowed into the back-pressure space S33 are divided into a flow passing through the communication hole 363d and a flow passing through the communication passage 367.

The control fluid Pb that has passed through the communication hole 363d is supplied to the back-pressure chamber 50. Accordingly, the pressure of the control fluid Pb in the back-pressure chamber 50 can be increased.

In addition, the control fluid Pb that has flowed into the communication passage 367 is depressurized by the throttling action, and is supplied to the low-pressure space S31 as the suction fluid Ps.

When the valve 370 is in a closed state, the control fluid Pb is prevented from being supplied to the back-pressure space S33. Meanwhile, a portion of the control fluid Pb passes through the communication passage 367, and flows into the low-pressure space S31. Accordingly, the pressure of the control fluid Pb gradually decreases over time.

As described above, since the back-pressure control valve V3 of the present embodiment is provided with the communication passage 367 that allows communication between the back-pressure space S33 and the low-pressure space S31, the scroll compressor C can be adjusted by employing the back-pressure control valve V3 that is adjusted in accordance with desired specifications. That is, since it is not necessary to machine the scroll compressor C side, the scroll compressor C can be easily adjusted.

In addition, the low-pressure space S31 into which the suction fluid Ps flows is disposed on the side opposite to the high-pressure space S32, into which the discharge fluid Pd flows, with respect to the back-pressure space S33 into which the control fluid Pb flows. According to this configuration, the effective pressure-receiving surface B3s and the effective pressure-receiving surface (D3 - A3) can be easily formed such that the influence of the pressure of the discharge fluid Pd having a relatively higher pressure than the suction fluid Ps is reduced and the influence of the pressure of the suction fluid Ps is increased. In detail, in the present embodiment, the areas of the effective pressure-receiving surface D3 of the pressure-sensitive body 361, the flow passage cross-section A3 of the valve seat 365, and the cross-section B3 of the pressure-driven body 371 can be easily designed.

In addition, the biasing force (F_{b32}) of the disk spring 372 acts leftward in the axial direction on the pressure-sensitive body 361 via the pressure-driven body 371. According to this configuration, the pressure-sensitive body 361 can be easily moved in the valve opening direction, and the valve opening degree can be easily adjusted by the disk spring 372.

In addition, since the curved surface 366 of the closing portion 361b of the pressure-sensitive body 361 abuts against the left end surface of the pressure-driven body 371, even when the pressure-driven body 371 tilts with respect to the axis of the pressure-sensitive body 361 and pushes the pressure-sensitive body 361 obliquely with respect to the axis, the pressure-sensitive body 361 can be easily moved along the axis of the pressure-sensitive body 361.

In addition, the pressure-driven body 371 is aligned along the axis of the first divided body 363 by the elastic force of the O-ring 373. Accordingly, the pressure-sensitive body 361 can be easily moved along the axis thereof.

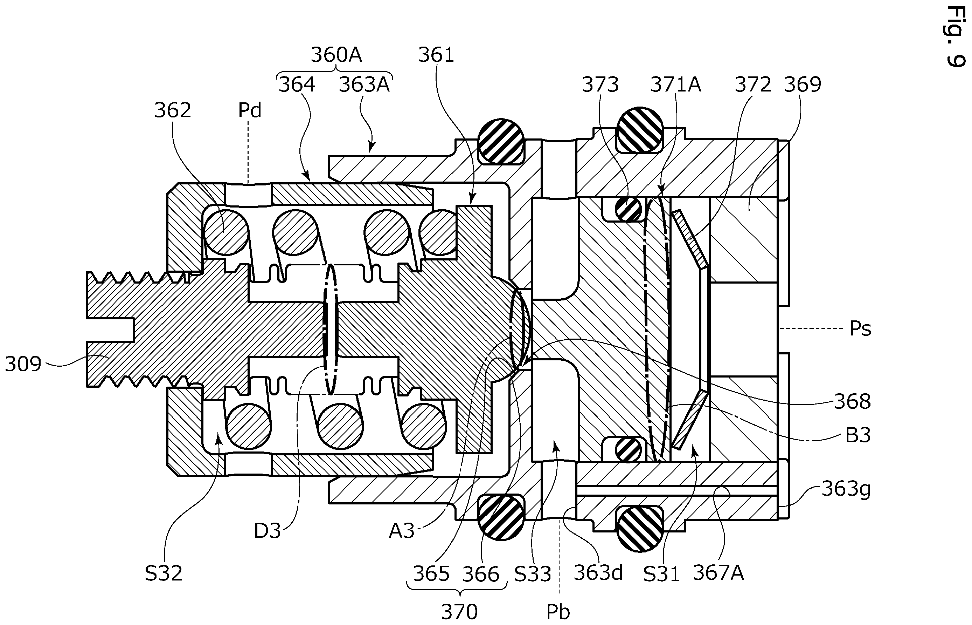

Incidentally, in the present embodiment, a configuration in which the communication passage 367 is formed in the pressure-driven body 371 has been described; however, referring to FIG. 9 illustrating Modification Example 3-1, a communication passage 367A may be formed in a housing 360A, and a pressure-driven body 371A in which a communication passage is not formed may be applied.

In more detail, the communication passage 367A penetrates through a peripheral wall of a first divided body 363A from the communication hole 363d to a communication groove 363g in the axial direction. The communication groove 363g is recessed from a right end surface of the peripheral wall of the first divided body 363A to the left in the axial direction, and is open toward the right in the axial direction and both sides in the radial direction. The communication groove 363g communicates with the low-pressure space S31.

Hereinafter, forces acting on the pressure-sensitive body 361 will be described. An effective pressure-receiving surface serving as the back pressure-receiving surface of the pressure-sensitive body 361 on which the pressure of the control fluid Pb acts is A3. An effective pressure-receiving surface serving as the back pressure-receiving surface of the pressure-driven body 371A on which the pressure of the control fluid Pb acts is B3. Hereinafter, the effective pressure-receiving surface of the pressure-driven body 371A on which the pressure of the control fluid Pb acts is referred to as an "effective pressure-receiving surface B3B".

An effective pressure-receiving surface serving as the high pressure-receiving surface of the pressure-sensitive body 361 on which the pressure of the discharge fluid Pd acts is (D3 - A3).

An effective pressure-receiving surface serving as the low pressure-receiving surface of the pressure-driven body 371A on which the pressure of the suction fluid Ps acts is B3. Hereinafter, the effective pressure-receiving surface of the pressure-driven body 371A on which the pressure of the suction fluid Ps acts is referred to as an "effective pressure-receiving surface B3S".

The pressure-sensitive body 361 is pushed to the left in the axial direction by a force (F_{Pd3} = Pd x (D3 - A3) generated due to the pressure of the discharge fluid Pd acting on the effective pressure-receiving surface (D3 - A3), a force (F_{Pb31} = Pb x A3) generated due to the pressure of the control fluid Pb acting on the effective pressure-receiving surface A3, a force (F_{Ps33} = Ps x B3S) generated due to the pressure of the suction fluid Ps acting on the effective pressure-receiving surface B3S, and the biasing force (F_{b32}) of the disk spring 372 (that is, with the leftward direction defined as positive, a force F₃₃ = F_{Pd3} + F_{Pb31} + F_{Ps33} + F_{b32} acts on the pressure-sensitive body 361).

In addition, the pressure-sensitive body 361 is pushed to the right in the axial direction by a force (F_{Pb34} = Pb x B3B) generated due to the pressure of the control fluid Pb acting on the effective pressure-receiving surface B3B and the biasing force (F_{b31}) of the coil spring 362 (that is, with the rightward direction defined as positive, a force F₃₄ = F_{Pb34} + F_{b31} acts on the pressure-sensitive body 361).

In addition, referring to FIG. 10 illustrating Modification Example 3-2, the annular groove 371c in a large-diameter body portion 371Ba of a pressure-driven body 371B may be omitted, and a communication passage 367B having a groove shape and extending linearly may be formed.

In more detail, the communication passage 367B is recessed from an outer peripheral surface of the large-diameter body portion 371Ba to the inner-diameter side, and is open toward the outer-diameter side and both sides in the axial direction. In other words, the communication passage 367B penetrates through an end edge on the outer-diameter side of the large-diameter body portion 371Ba in the axial direction. The communication passage 367B communicates with the back-pressure space S33 and the low-pressure space S31.

In addition, each of an outer peripheral surface of the large-diameter body portion 371Ba and an inner peripheral surface of the first divided body 363 is a smooth surface having a constant diameter along the axial direction, and both surfaces are slidable relative to each other.

In the case of such a configuration, since the pressure-driven body 371B moves while the outer peripheral surface of the large-diameter body portion 371Ba is in sliding contact with the inner peripheral surface of the first divided body 363, it is possible to prevent the pressure-driven body 371B from tilting with respect to the first divided body 363 while forming the communication passage 367B between the first divided body 363 and the pressure-driven body 371B.

Incidentally, forces acting on the pressure-sensitive body 361 are substantially the same as those in the third embodiment.

Even with such a configuration, as described above, since the curved surface 366 of the pressure-sensitive body 361 abuts against the left end surface of the small-diameter body portion 371b of the pressure-driven body 371B, the pressure-sensitive body 361 can be easily moved along the axis of the pressure-sensitive body 361.

Incidentally, as in the communication passage 267B of Modification Example 2-2 of the second embodiment (see FIG. 7), the clearance between the first divided body and the pressure-driven body may be used as a communication passage.

### {Fourth embodiment}

Next, a valve according to the fourth embodiment will be described with reference to FIGS. 11 to 14. Incidentally, the description of configurations that are the same as and overlap with the configurations of the first embodiment will be omitted.

As illustrated in FIG. 11, a back-pressure control valve V4 of the fourth embodiment is a normally open valve that is mainly composed of a housing 460, a valve body 461, and a pressure-sensitive body 462.

The housing 460 partitions two low-pressure spaces S41 and S41' communicating with the low-pressure chamber 20, a high-pressure space S42 communicating with the high-pressure chamber 30, and a back-pressure space S43 communicating with the back-pressure chamber 50. Incidentally, the housing 460 may at least partially partition the low-pressure spaces S41 and S41', the high-pressure space S42, and the back-pressure space S43.

The housing 460 is composed of a first divided body 463 having a tubular shape and a second divided body 464 having a tubular shape.

A partition wall portion 463e having a through-hole 463a is formed at a left end of the first divided body 463.

A partition wall portion 463f having a through-hole 463g is formed at a right end of the first divided body 463.

A space sandwiched between the partition wall portions 463e and 463f in the axial direction is the high-pressure space S42. The high-pressure space S42 communicates with the high-pressure chamber 30 through a communication hole 463d formed in the first divided body 463.

In addition, a space to the right in the axial direction of the partition wall portion 463f serves as the other low-pressure space S41' into which the suction fluid Ps flows. Specifically, the other low-pressure space S41' is partitioned by the partition wall portion 463f and a recess for installing the back-pressure control valve V4, which is provided in the fixed scroll 41.

In addition, the partition wall portion 463e is internally fitted and fixed to an annular step portion 464b provided in a right end opening portion of the second divided body 464.

A partition wall portion 464a having a valve hole 464d and a valve seat 465 is formed in an axial center portion of the second divided body 464. The valve seat 465, together with a tapered surface 466 of the valve body 461, constitutes a valve 470 that controls the opening and closing of a flow passage 468 between the valve seat 465 and the tapered surface 466.

A space sandwiched between the partition wall portion 464a of the second divided body 464 and the partition wall portion 463e of the first divided body 463 is the back-pressure space S43. The back-pressure space S43 communicates with the back-pressure chamber 50 through a communication hole 464c formed in the second divided body 464.

A lid member 409 is attached to an inner peripheral surface of a left end opening portion of the second divided body 464 in a sealed manner by screwing.

A space sandwiched between the partition wall portion 464a of the second divided body 464 and the lid member 409 in the axial direction is one low-pressure space S41. The low-pressure space S41 communicates with the low-pressure chamber 20 through a communication hole 464e formed in the second divided body 464.

The pressure-sensitive body 462 is disposed between the lid member 409 and the valve body 461.

The pressure-sensitive body 462 is a bellows which is composed of a body portion 462a and a closing portion 462b, and the inside of which is maintained in vacuum. The pressure-sensitive body 462 also functions as biasing means for biasing the valve body 461 in the opening direction.

The valve body 461 includes a large-diameter body portion 461a; a medium-diameter body portion 461b extending from the large-diameter body portion 461a to the left in the axial direction; a small-diameter body portion 461c having a smaller diameter and protruding from the medium-diameter body portion 461b to the left in the axial direction; and an extending shaft portion 461d extending from the large-diameter body portion 461a to the right in the axial direction.

The large-diameter body portion 461a is inserted through the through-hole 463a of the first divided body 463.

Since a gap between an inner peripheral surface of the partition wall portion 463e which constitutes the through-hole 463a and an outer peripheral surface of the large-diameter body portion 461a is very small, the refrigerant hardly moves between the high-pressure space S42 and the back-pressure space S43 via the gap. In addition, each of the inner peripheral surface of the partition wall portion 463e and the outer peripheral surface of the large-diameter body portion 461a is a smooth surface having a constant diameter along the axial direction, and both surfaces are slidable relative to each other.

The tapered surface 466 that is reduced in diameter as the tapered surface 466 extends toward the left in the axial direction is formed on the medium-diameter body portion 461b. The medium-diameter body portion 461b is disposed in the back-pressure space S43.

The small-diameter body portion 461c is inserted through the valve hole 464d from the back-pressure space S43 side, and a tip portion of the small-diameter body portion 461c is fitted and connected to a recess 462e, which is formed in the closing portion 462b, in the low-pressure space S41.

The extending shaft portion 461d is inserted through the through-hole 463g. The extending shaft portion 461d has a larger diameter than the medium-diameter body portion 461b.

Since a gap between an inner peripheral surface of the partition wall portion 463f which constitutes the through-hole 463g and an outer peripheral surface of the extending shaft portion 461d is very small, the refrigerant hardly moves between the high-pressure space S42 and the low-pressure space S41' via the gap. In addition, each of the inner peripheral surface of the partition wall portion 463f and the outer peripheral surface of the extending shaft portion 461d is a smooth surface having a constant diameter along the axial direction, and both surfaces are slidable relative to each other.

In addition, a communication passage 467 is formed in the valve body 461.

The communication passage 467 is formed with a vertically inverted and laterally reversed L-shaped cross-sectional shape, extends from a left end surface of the large-diameter body portion 461a toward the right in the axial direction, and then extends substantially orthogonally outward in the radial direction on the left side of the axial center of the extending shaft portion 461d.

The communication passage 467 is formed so as to always communicate with the high-pressure space S42 and the back-pressure space S43 within the movement range of the valve body 461.

The valve body 461 is configured such that the pressure of each of the control fluid Pb and the discharge fluid Pd acts on the large-diameter body portion 461a, the pressure of each of the control fluid Pb and the suction fluid Ps acts on the medium-diameter body portion 461b, and the pressure of the suction fluid Ps acts on the extending shaft portion 461d.

An effective pressure-receiving surface serving as the back pressure-receiving surface of the valve body 461 on which the pressure of the control fluid Pb acts is substantially the same as an area (C4 - A4 - E) obtained by subtracting a flow passage cross-section A4 of the valve seat 465 at the location where the tapered surface 466 is in contact with the valve seat 465 with the tapered surface 466 seated thereon from a portion (C4 - E) of a cross-section C4 of the large-diameter body portion 461a, the portion being located outside the flow passage cross-section E of the communication passage 467. Hereinafter, the effective pressure-receiving surface of the valve body 461 on which the pressure of the control fluid Pb acts is referred to as an "effective pressure-receiving surface (C4 - A4 - E)".

An effective pressure-receiving surface serving as the high pressure-receiving surface of the valve body 461 on which the pressure of the discharge fluid Pd acts is substantially the same as an area (C4 - B4 - E) obtained by subtracting a cross-section B4 of the extending shaft portion 461d from the portion (C4 - E) of the cross-section C4 of the large-diameter body portion 461a, the portion being located outside the flow passage cross-section E of the communication passage 467. Hereinafter, the effective pressure-receiving surface of the valve body 461 on which the pressure of the discharge fluid Pd acts is referred to as an "effective pressure-receiving surface (C4 - B4 - E)".

The cross-section B4 of the extending shaft portion 461d is larger in diameter and wider than the flow passage cross-section A4 of the valve seat 465 (B4 > A4). Therefore, the effective pressure-receiving surface (C4 - A4 - E) is wider than the effective pressure-receiving surface (C4 - B4 -E) ((C4 - A4 - E) > (C4 - B4 -E)).

An effective pressure-receiving surface serving as the low pressure-receiving surface of the valve body 461 on which the pressure of the suction fluid Ps acts is substantially the same as the cross-section B4 of the extending shaft portion 461d. Hereinafter, the effective pressure-receiving surface of the valve body 461 on which the pressure of the suction fluid Ps acts is referred to as an "effective pressure-receiving surface B4".

In addition, regardless of whether the valve 470 is in an open state or a closed state, the closing portion 462b of the pressure-sensitive body 462 is disposed at a position that is spaced apart from the partition wall portion 464a to the left in the axial direction. That is, the pressure of the suction fluid Ps in the low-pressure space S41 always acts on the pressure-sensitive body 462 toward the left in the axial direction.

An effective pressure-receiving surface serving as the low pressure-receiving surface of the pressure-sensitive body 462 on which the pressure of the suction fluid Ps acts is substantially the same as a portion of an effective pressure-receiving surface D4 of the pressure-sensitive body 462, the portion being located outside the flow passage cross-section A4 of the valve seat 465. Hereinafter, the effective pressure-receiving surface of the pressure-sensitive body 462 on which the pressure of the suction fluid Ps acts is referred to as an "effective pressure-receiving surface (D4 - A4)".

Next, the opening and closing operation of the back-pressure control valve V4 will be described. In the housing 460, the suction fluid Ps flows into the low-pressure spaces S41 and S41', the discharge fluid Pd flows into the high-pressure space S42, and the control fluid Pb flows into the back-pressure space S43.

The valve body 461 is pushed to the left in the axial direction by a force (F_{Ps41} = Ps x B4) generated due to the pressure of the suction fluid Ps acting on the effective pressure-receiving surface B4, a force (F_{Pd4} = Pd x (C4 - B4 - E)) generated due to the pressure of the discharge fluid Pd acting on the effective pressure-receiving surface (C4 - B4 - E), and a force (F_{Ps42} = Ps x (D4 - A4)) generated due to the pressure of the suction fluid Ps acting on the effective pressure-receiving surface (D4 - A4) (that is, with the leftward direction defined as positive, a force F₄₁ = F_{Ps41} + F_{Pd4} + F_{Ps42} acts on the valve body 461).

In addition, the valve body 461 is pushed to the right in the axial direction by a force (F_{Pb4} = Pb x (C4 - A4 - E)) generated due to the pressure of the control fluid Pb acting on the effective pressure-receiving surface (C4 - A4 - E) and the biasing force (F_{b4}) of the pressure-sensitive body 462 (that is, with the rightward direction defined as positive, a force F₄₂ = F_{Pb4} + F_{b4} acts on the valve body 461).

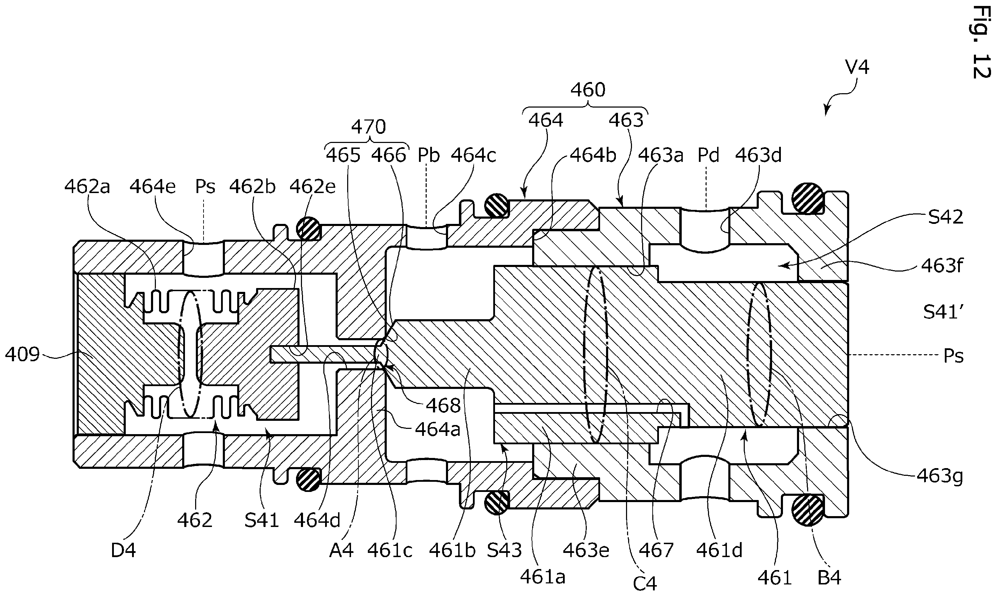

When the force F₄₁ is equal to or greater than the force F₄₂, the valve body 461 moves to the left in the axial direction and is seated on the valve seat 465 as illustrated in FIG. 12 (F₄₁ ≥ F₄₂). That is, the valve 470 is brought into a closed state. In addition, the closing portion 462b of the pressure-sensitive body 462 moves to the left in the axial direction together with the valve body 461 while contracting the body portion 462a.

When the force F₄₁ is less than the force F₄₂, the valve body 461 moves to the right in the axial direction (force F₄₁ < force F₄₂). That is, as illustrated in FIG. 11, the valve 470 becomes opened. In addition, the opening degree of the valve 470 increases as the tapered surface 466 of the valve body 461 separates from the valve seat 465. In addition, the closing portion 462b of the pressure-sensitive body 462 moves to the right in the axial direction together with the valve body 461 while the body portion 462a extends.

Regardless of whether the valve 470 is in an open state or a closed state, the discharge fluid Pd that has flowed into the communication passage 467 from the high-pressure space S42 is depressurized by the throttling action, and is supplied to the back-pressure space S43 as the control fluid Pb.

In addition, the lubricating oil separated by the oil separator 6 passes through the communication passage 467 together with the refrigerant, and is supplied to the back-pressure space S43.

When the valve 470 is in an open state, the control fluid Pb and the lubricating oil that have passed through the communication passage 467 and have flowed into the back-pressure space S43 are divided into a flow passing through the communication hole 464c and a flow passing through the valve 470.

The control fluid Pb and the lubricating oil that have passed through the communication hole 464c are supplied to the back-pressure chamber 50. Accordingly, it is possible to prevent the lubricating oil in the back-pressure chamber 50 from being depleted while increasing the pressure of the control fluid Pb in the back-pressure chamber 50.

In addition, the control fluid Pb that has flowed into the valve 470 is depressurized according to the opening degree of the valve 470, and is supplied to the one low-pressure space S41 as the suction fluid Ps. The valve 470 is a so-called BS valve. Accordingly, the pressure of the control fluid Pb is prevented from increasing excessively.

In addition, the lubricating oil that has flowed into the valve 470 passes through the valve 470 together with the refrigerant, and is supplied to the low-pressure space S41. Accordingly, the lubricating oil can be prevented from being depleted in the low-pressure chamber 20.

When the pressure of the control fluid Pb tends to become insufficient and the valve 470 is in a closed state, the control fluid Pb is prevented from being supplied to the low-pressure space S41 as the suction fluid Ps. Meanwhile, the discharge fluid Pd passes through the communication passage 467, and flows into the back-pressure space S43. Accordingly, the pressure of the control fluid Pb gradually increases over time.

As described above, since the back-pressure control valve V4 of the present embodiment is provided with the communication passage 467 that allows communication between the high-pressure space S42 and the back-pressure space S43, the scroll compressor C can be adjusted by employing the back-pressure control valve V4 that is adjusted in accordance with desired specifications. That is, since it is not necessary to machine the scroll compressor C side, the scroll compressor C can be easily adjusted.

In addition, since the lubricating oil can be supplied from the back-pressure space S43 to the low-pressure space S41 through the valve 470 inside the back-pressure control valve V4, the path that the lubricating oil takes to reach the low-pressure chamber 20 after being separated by the oil separator 6 can be shortened, for example, compared to a configuration in which the lubricating oil that has passed through the back-pressure chamber 50 is supplied to the low-pressure chamber 20. Accordingly, the lubricating oil can be prevented from being depleted in the low-pressure chamber 20.

Further, since the high-pressure space S42 and the back-pressure space S43 always communicate with each other through the communication passage 467, the lubricating oil can be supplied from the high-pressure space S42 to the back-pressure space S43 regardless of whether the valve 470 is in an open state or a closed state. Therefore, compared to a configuration in which the valve 70 is provided between the high-pressure space S2 and the back-pressure space S3 as in the first embodiment, the lubricating oil can be prevented from being depleted in the back-pressure chamber 50.

Incidentally, in the present embodiment, the valve 470 has been described as a normally open BS valve; however, for example, the valve 470 may be configured as a normally closed BS valve by employing biasing means for applying a biasing force in the closing direction.

In addition, since the communication passage 467 is a passage penetrating through the valve body 461, it is possible to form the communication passage 467 without machining the scroll compressor C.

In addition, since the back-pressure control valve V4 is configured such that the valve opening degree is adjusted based on the balance between the sum of the force (F_{Pd4}) due to the pressure of the discharge fluid Pd and the force (F_{Ps41 +} F_{Ps42}) due to the pressure of the suction fluid Ps and the sum of the force (F_{Pb4}) due to the pressure of the control fluid Pb and the biasing force (F_{b4}) of the pressure-sensitive body 462, the valve opening degree can be smoothly changed in response to changes in the pressure of the high-pressure chamber 30 and the low-pressure chamber 20, and the pressure in the back-pressure chamber 50 can be instantaneously adjusted.

In addition, since the back-pressure control valve V4 is configured such that the effective pressure-receiving surface B4 on which the pressure of the suction fluid Ps acts is wider than the effective pressure-receiving surface (C4 - B4 - E) on which the pressure of the discharge fluid Pd acts (B4 > (C4 - B4 - E)), it is possible to relatively increase the influence of the pressure of the suction fluid Ps while suppressing the influence of the pressure of the discharge fluid Pd having a relatively higher pressure than the suction fluid Ps. According to this configuration, the sudden movement of the valve body 461 caused by a sudden change in the pressure of the discharge fluid Pd can be suppressed.

In addition, since the back-pressure control valve V4 is configured such that the effective pressure-receiving surface (C4 - A4 - E) on which the pressure of the control fluid Pb acts is wider than the effective pressure-receiving surface (C4 - B4 - E) on which the pressure of the discharge fluid Pd acts ((C4 - A4 - E) > (C4 - B4 - E)), it is possible to relatively increase the influence of the pressure of the control fluid Pb while suppressing the influence of the pressure of the discharge fluid Pd having a relatively higher pressure than the control fluid Pb. According to this configuration, the sudden movement of the valve body 461 caused by a sudden change in the pressure of the discharge fluid Pd can be suppressed.

In addition, the back-pressure control valve V4 is configured such that the low-pressure spaces S41 and S41' are provided at both axial ends of the housing 460 and the pressure of the suction fluid Ps acts on each of the valve body 461 and the pressure-sensitive body 462. According to this configuration, the back-pressure control valve V4 allows the valve body 461 to be easily seated on the valve seat 465.

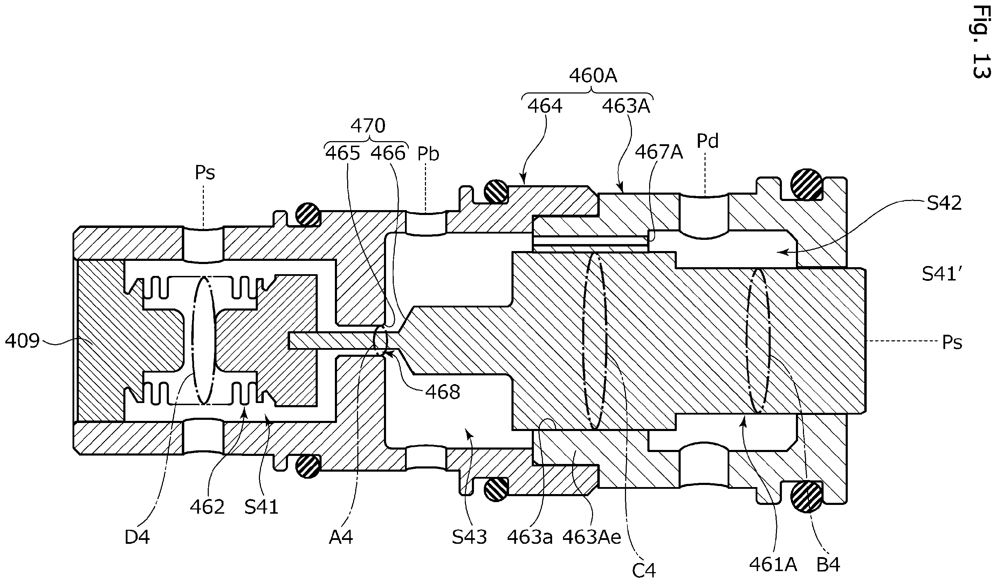

Incidentally, in the present embodiment, a configuration in which the communication passage 467 is formed in the valve body 461 has been described; however, referring to FIG. 13 illustrating Modification Example 4-1, a communication passage 467A may be formed in a housing 460A, and a valve body 461A in which a communication passage is not formed may be applied.

In more detail, the communication passage 467A penetrates axially through a partition wall portion 463Ae of a first divided body 463A on the outer-diameter side of the through-hole 463a. The communication passage 467A communicates with the high-pressure space S42 and the back-pressure space S43.

Hereinafter, forces acting on the valve body 461A will be described. An effective pressure-receiving surface serving as the back pressure-receiving surface of the valve body 461A on which the pressure of the control fluid Pb acts is (C4 - A4).

An effective pressure-receiving surface serving as the high pressure-receiving surface of the valve body 461A on which the pressure of the discharge fluid Pd acts is (C4 - B4).

An effective pressure-receiving surface serving as the low pressure-receiving surface of the valve body 461A on which the pressure of the suction fluid Ps acts is B4. In addition, an effective pressure-receiving surface serving as the low pressure-receiving surface of the pressure-sensitive body 462 on which the pressure of the suction fluid Ps acts is (D4 - A4).

The valve body 461A is pushed to the left in the axial direction by a force (F_{Ps41} = Ps x B4) generated due to the pressure of the suction fluid Ps acting on the effective pressure-receiving surface B4, a force (F_{Pd41} = Pd x (C4 - B4)) generated due to the pressure of the discharge fluid Pd acting on the effective pressure-receiving surface (C4 - B4), and a force (F_{Ps42} = Ps x (D4 - A4)) generated due to the pressure of the suction fluid Ps acting on the effective pressure-receiving surface (D4 - A4) (that is, with the leftward direction defined as positive, a force F₄₃ = F_{Ps41} + F_{Pd41} + F_{Ps42} acts on the valve body 461A).

In addition, the valve body 461A is pushed to the right in the axial direction by a force (F_{Pb41} = Pb x (C4 - A4)) generated due to the pressure of the control fluid Pb acting on the effective pressure-receiving surface (C4 - A4) and the biasing force (F_{b4}) of the pressure-sensitive body 462 (that is, with the rightward direction defined as positive, the force F₄₄ = F_{Pb41} + F_{b4} acts on the valve body 461A).

Even with such a configuration, it is possible to form the communication passage 467A without machining the scroll compressor C.

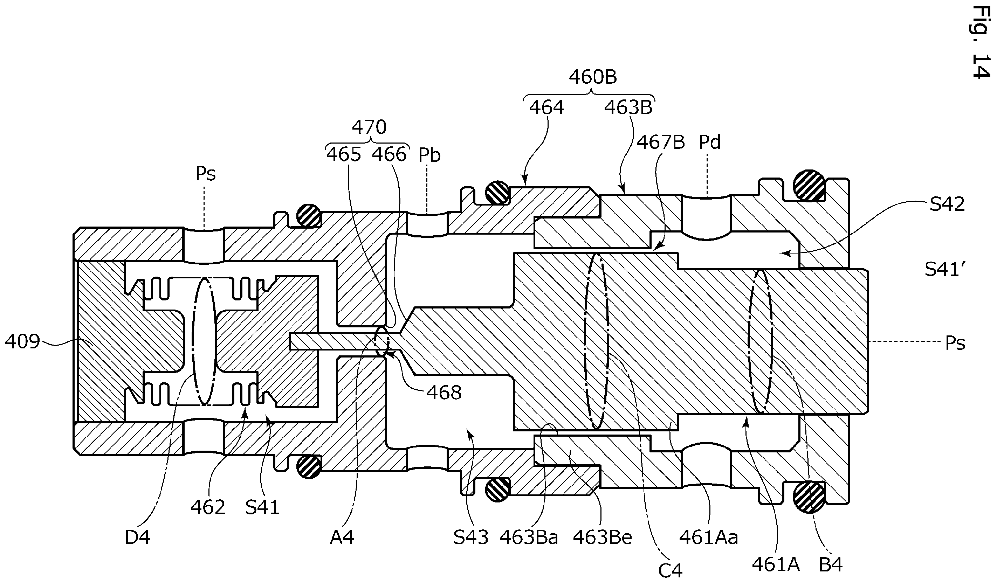

In addition, referring to FIG. 14 illustrating Modification Example 4-2, a clearance may be provided between a first divided body 463B of a housing 460B and the valve body 461A, and the clearance may serve as a communication passage 467B that always communicates with the high-pressure space S42 and the back-pressure space S43 that are adjacent thereto.

In more detail, a diameter of a through-hole 463Ba of the first divided body 463B, that is, an inner diameter of a partition wall portion 463Be is slightly larger than a diameter of a large-diameter body portion 461Aa of the valve body 461A. Accordingly, a clearance between an inner peripheral surface of the partition wall portion 463Be and an outer peripheral surface of the large-diameter body portion 461Aa, that is, a radial gap is ensured.

Incidentally, forces acting on the valve body 461A are substantially the same as those in Modification Example 4-1.

In the case of such a configuration, it is possible to configure the communication passage 467B in a simple manner without machining the scroll compressor C.

In addition, it is possible to configure the communication passage 467B in a simple manner without performing machining such as drilling a communication passage in the housing 460B or the valve body 461A.

### {Fifth embodiment}

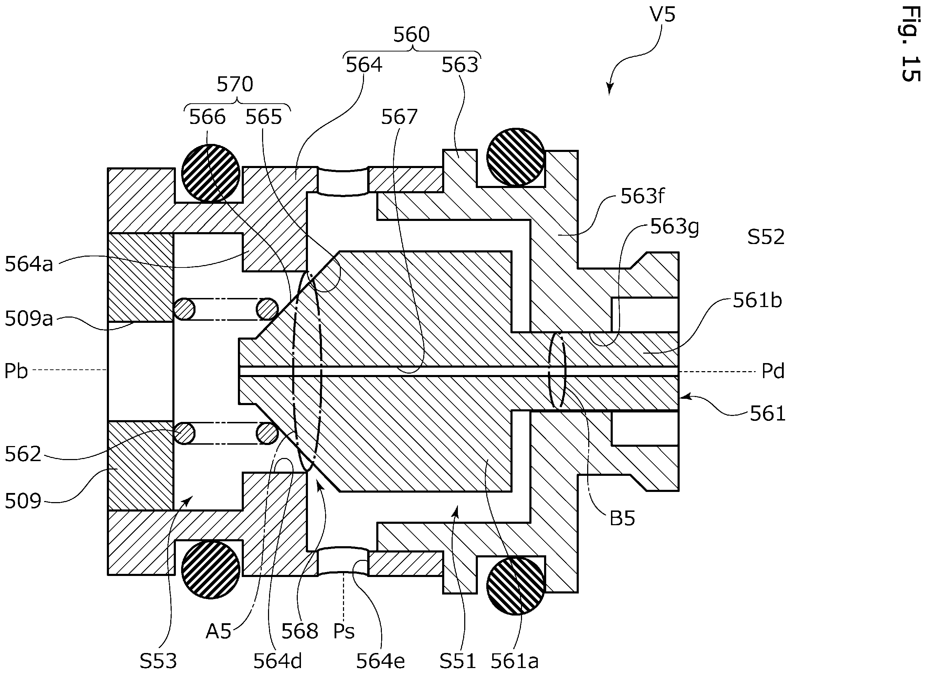

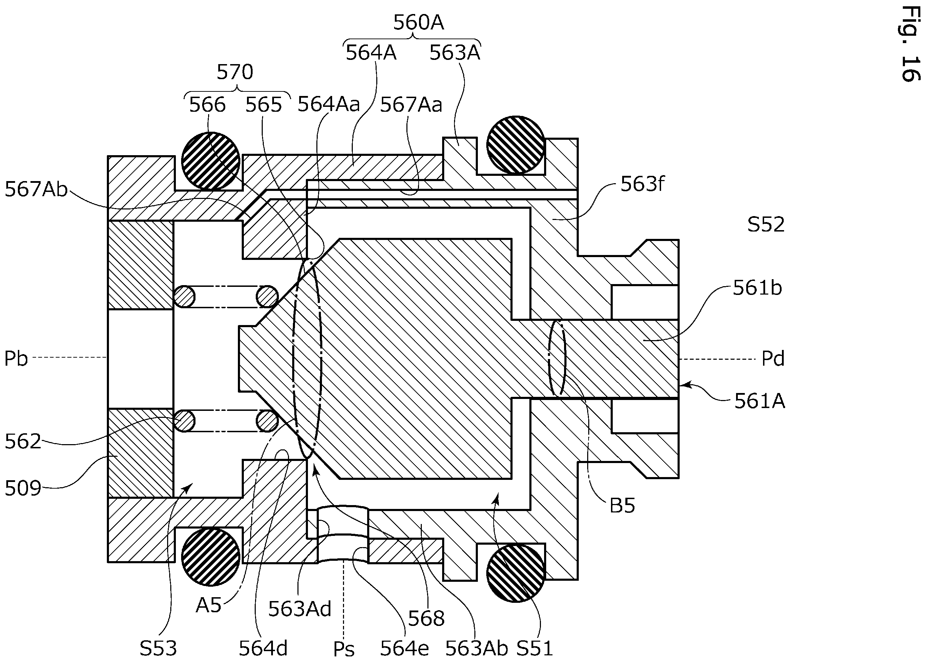

Next, a valve according to a fifth embodiment will be described with reference to FIGS. 15 and 16. Incidentally, the description of configurations that are the same as and overlap with the configurations of the first embodiment will be omitted.

As illustrated in FIG. 15, a back-pressure control valve V5 of the fifth embodiment is a normally open valve that is mainly composed of a housing 560, a valve body 561, and a coil spring 562 serving as biasing means for biasing the valve body 561 in the opening direction.

The housing 560 partitions a low-pressure space S51 communicating with the low-pressure chamber 20, a high-pressure space S52 communicating with the high-pressure chamber 30, and a back-pressure space S53 communicating with the back-pressure chamber 50. Incidentally, the housing 560 may at least partially partition the low-pressure space S51, the high-pressure space S52, and the back-pressure space S53.

The housing 560 is composed of a first divided body 563 having a tubular shape and a second divided body 564 having a tubular shape.

A partition wall portion 563f having a through-hole 563g is formed on the right side of the first divided body 563.

A space to the right in the axial direction of the partition wall portion 563f serves the high-pressure space S52 into which the discharge fluid Pd flows. Specifically, the high-pressure space S52 is partitioned by the partition wall portion 563f and a recess for installing the back-pressure control valve V5, which is provided in the fixed scroll 41.

The first divided body 563 is internally fitted and fixed to a right end opening portion of the second divided body 564.

A partition wall portion 564a having a valve hole 564d and a valve seat 565 is formed in an axial center portion of the second divided body 564. The valve seat 565, together with a tapered surface 566 of the valve body 561, constitutes a valve 570 that controls the opening and closing of a flow passage 568 between the valve seat 565 and the tapered surface 566.

A space sandwiched between the partition wall portion 564a of the second divided body 564 and the partition wall portion 563f of the first divided body 563 is the low-pressure space S51. The low-pressure space S51 communicates with the low-pressure chamber 20 through a communication hole 564e formed in the second divided body 564.

A lid member 509 having a through-hole 509a is attached to an inner peripheral surface of a left end opening portion of the second divided body 564 by screwing. A space sandwiched between the partition wall portion 564a of the second divided body 564 and the lid member 509 is the back-pressure space S53. The back-pressure space S53 communicates with the back-pressure chamber 50 through the through-hole 509a.

The valve body 561 includes a large-diameter body portion 561a and an extending shaft portion 561b extending from the large-diameter body portion 561a to the right in the axial direction.

The large-diameter body portion 561a is disposed in the low-pressure space S51. The tapered surface 566 that is reduced in diameter as the tapered surface 566 extends toward the left in the axial direction is formed on the large-diameter body portion 561a.

In addition, regardless of whether the valve 570 is in an open state or a closed state, the large-diameter body portion 561a is disposed at a position that is spaced apart from the partition wall portion 563f to the left in the axial direction. That is, the pressure of the suction fluid Ps in the low-pressure space S51 always acts on the large-diameter body portion 561a toward the left in the axial direction.

The extending shaft portion 561b is inserted through the through-hole 563g.

Since a gap between an inner peripheral surface of the partition wall portion 563f which constitutes the through-hole 563g and an outer peripheral surface of the extending shaft portion 561b is very small, the refrigerant hardly moves between the high-pressure space S52 and the low-pressure space S51 via the gap. In addition, each of the inner peripheral surface of the partition wall portion 563f and the outer peripheral surface of the extending shaft portion 561b is a smooth surface having a constant diameter along the axial direction, and both surfaces are slidable relative to each other.

In addition, a communication passage 567 that is linear is formed in the valve body 561 so as to penetrate therethrough on its axis. The communication passage 567 allows communication between the high-pressure space S52 and the back-pressure space S53.

The valve body 561 is configured such that the pressure of each of the control fluid Pb and the suction fluid Ps acts on the large-diameter body portion 561a and the pressure of the discharge fluid Pd acts on the extending shaft portion 561b.

An effective pressure-receiving surface serving as the back pressure-receiving surface of the valve body 561 on which the pressure of the control fluid Pb acts is substantially the same as a portion (A5 - E) of a flow passage cross-section A5 of the valve seat 565 at the location where the tapered surface 566 is in contact with the valve seat 565 with the tapered surface 566 seated thereon, the portion being located outside the flow passage cross-section E of the communication passage 567. Hereinafter, the effective pressure-receiving surface of the valve body 561 on which the pressure of the control fluid Pb acts is referred to as an "effective pressure-receiving surface (A5 - E)".

An effective pressure-receiving surface serving as the low pressure-receiving surface of the valve body 561 on which the pressure of the suction fluid Ps acts is substantially the same as an area (A5 - B5) obtained by subtracting a portion (B5 - E) of a cross-section B5 of the extending shaft portion 561b, the portion being located outside the flow passage cross-section E of the communication passage 567, from the portion (A5 - E) of the flow passage cross-section A5 of the valve seat 565, the portion being located outside the flow passage cross-section E of the communication passage 567. Hereinafter, the effective pressure-receiving surface of the valve body 561 on which the pressure of the suction fluid Ps acts is referred to as an "effective pressure-receiving surface (A5 - B5)".

An effective pressure-receiving surface serving as the high pressure-receiving surface of the valve body 561 on which the pressure of the discharge fluid Pd acts is substantially the same as a portion (B5 - E) of the cross-section B5 of the extending shaft portion 561b, the portion being located outside the flow passage cross-section E of the communication passage 567. Hereinafter, the effective pressure-receiving surface of the valve body 561 on which the pressure of the discharge fluid Pd acts is referred to as an "effective pressure-receiving surface (B5 - E)".

The coil spring 562 is disposed in a compressed state between the lid member 509 and the large-diameter body portion 561a of the valve body 561.

Next, the opening and closing operation of the back-pressure control valve V5 will be described. In the housing 560, the suction fluid Ps flows into the low-pressure space S51, the discharge fluid Pd flows into the high-pressure space S52, and the control fluid Pb flows into the back-pressure space S53.

The valve body 561 is pushed to the left in the axial direction by a force (F_{Ps5} = Ps x (A5 -B5)) generated due to the pressure of the suction fluid Ps acting on the effective pressure-receiving surface (A5 - B5) and a force (F_{Pd5} = Pd x (B5 - E)) generated due to the pressure of the discharge fluid Pd acting on the effective pressure-receiving surface (B5 - E) (that is, with the leftward direction defined as positive, a force F₅₁ = F_{Ps5} + F_{Pd5} acts on the valve body 561).

In addition, the valve body 561 is pushed to the right in the axial direction by a force (F_{Pb5} = Pb x (A5 - E)) generated due to the pressure of the control fluid Pb acting on the effective pressure-receiving surface (A5 - E) and the biasing force (F_{b5}) of the coil spring 562 (that is, with the rightward direction defined as positive, a force F₅₂ = F_{Pb5} + F_{b5} acts on the valve body 561).

When the force F₅₁ is equal to or greater than the force F₅₂, the valve body 561 moves to the left in the axial direction and is seated on the valve seat 565 (F₅₁ ≥ F₅₂). That is, the valve 570 is brought into a closed state.

When the force F₅₁ is less than the force F₅₂, the valve body 561 moves to the right in the axial direction (force F₅₁ < force F₅₂). That is, the valve 570 is brought into an open state. In addition, the opening degree of the valve 570 increases as the tapered surface 566 of the valve body 561 separates from the valve seat 565.

Regardless of whether the valve 570 is in an open state or a closed state, the discharge fluid Pd that has flowed into the communication passage 567 from the high-pressure space S52 is depressurized by the throttling action, and is supplied to the back-pressure space S53 as the control fluid Pb.

When the valve 570 is in an open state, the control fluid Pb that has passed through the communication passage 567 and has flowed into the back-pressure space S53 is divided into a flow passing through the through-hole 509a and a flow passing through the valve 570.

The control fluid Pb that has passed through the through-hole 509a is supplied to the back-pressure chamber 50. Accordingly, the pressure of the control fluid Pb in the back-pressure chamber 50 can be increased.

In addition, the control fluid Pb that has flowed into the valve 570 is depressurized according to the opening degree of the valve 570, and is supplied to the low-pressure space S51 as the suction fluid Ps.

When the pressure of the control fluid Pb tends to become insufficient and the valve 570 is in a closed state, the control fluid Pb is prevented from being supplied to the low-pressure space S51 as the suction fluid Ps. Meanwhile, the discharge fluid Pd passes through the communication passage 567, and flows into the back-pressure space S53. Accordingly, the pressure of the control fluid Pb gradually increases over time.

As described above, since the back-pressure control valve V5 of the present embodiment is provided with the communication passage 567 that allows communication between the high-pressure space S52 and the back-pressure space S53, the scroll compressor C can be adjusted by employing the back-pressure control valve V5 that is adjusted in accordance with desired specifications. That is, since it is not necessary to machine the scroll compressor C side, the scroll compressor C can be easily adjusted.

Incidentally, in the present embodiment, a configuration in which the communication passage 567 is formed in the valve body 561 has been described; however, referring to FIG. 16 illustrating Modification Example 5-1, communication passages 567Aa and 567Ab may be formed in a housing 560A, and a valve body 561A in which a communication passage is not formed may be applied.

In more detail, a left end surface of a peripheral wall 563Ab of a first divided body 563A is in pressure contact with a partition wall portion 564Aa of a second divided body 564A in a sealed manner when the first divided body 563A is internally fitted and fixed to the second divided body 564A. Incidentally, the sealing between the peripheral wall 563Ab and the partition wall portion 564Aa is not limited to pressure contact, and may be achieved by a seal member such as a packing, or may be changed as appropriate.

In addition, a communication hole 563Ad is formed in the peripheral wall 563Ab so as to penetrate therethrough in the radial direction. The communication hole 563Ad communicates with the low-pressure space S51 and the communication hole 564e of the second divided body 564A.

In addition, a communication passage 567Aa is formed in the peripheral wall 563Ab so as to penetrate therethrough in the axial direction. The communication passage 567Aa is formed at a position where the phase thereof is different from that of the communication hole 563Ad in the circumferential direction. The communication passage 567Aa communicates with the high-pressure space S52.

The communication passage 567Ab is formed in the second divided body 564A. The communication passage 567Ab extends from a right end surface of the partition wall portion 564Aa toward the left, and then extends to the left in the axial direction while being inclined to the inner-diameter side at the axial center of the partition wall portion 564Aa. The communication passage 567Ab communicates with the communication passage 567Aa of the first divided body 563A and the back-pressure space S53.

Hereinafter, forces acting on the valve body 561A will be described. An effective pressure-receiving surface serving as the back pressure-receiving surface of the valve body 561A on which the pressure of the control fluid Pb acts is A5.

An effective pressure-receiving surface serving as the high pressure-receiving surface of the valve body 561A on which the pressure of the discharge fluid Pd acts is B5.

An effective pressure-receiving surface serving as the low pressure-receiving surface of the valve body 561A on which the pressure of the suction fluid Ps acts is (A5 - B5).

The valve body 561A is pushed to the left in the axial direction by a force (F_{Ps5} = Ps x (A5 -B5)) generated due to the pressure of the suction fluid Ps acting on the effective pressure-receiving surface (A5 - B5) and a force (F_{Pd51} = Pd x B5) generated due to the pressure of the discharge fluid Pd acting on the effective pressure-receiving surface B5 (that is, with the leftward direction defined as positive, a force F₅₃ = F_{Ps5} + F_{Pd51} acts on the valve body 561A).

In addition, the valve body 561A is pushed to the right in the axial direction by a force (F_{Pb51} = Pb x A5) generated due to the pressure of the control fluid Pb acting on the effective pressure-receiving surface A5 and the biasing force (F_{b5}) of the coil spring 562 (that is, with the rightward direction defined as positive, a force F₅₄ = F_{Pb51} + F_{b5} acts on the valve body 561A).

### {Sixth embodiment}

Next, a valve according to a sixth embodiment will be described with reference to FIGS. 17 to 19. Incidentally, the description of configurations that are the same as and overlap with the configurations of the first embodiment will be omitted.

As illustrated in FIG. 17, a back-pressure control valve V6 of the sixth embodiment is a normally open valve that is mainly composed of a housing 660, a valve body 661, and a pressure-sensitive body 662.

The housing 660 partitions a low-pressure space S61 communicating with the low-pressure chamber 20, two high-pressure spaces S62 and S62' communicating with the high-pressure chamber 30, and a back-pressure space S63 communicating with the back-pressure chamber 50. Incidentally, the housing 660 may at least partially partition the low-pressure space S61, the high-pressure spaces S62 and S62', and the back-pressure space S63.

The housing 660 is composed of a first divided body 663 having a tubular shape and a second divided body 664 having a tubular shape.

A partition wall portion 663f having a through-hole 663g is formed at a right end of the first divided body 663.

A space to the right in the axial direction of the partition wall portion 663f serves as the other high-pressure space S62' into which the discharge fluid Pd flows. Specifically, the other high-pressure space S62' is partitioned by the partition wall portion 663f and a recess for installing the back-pressure control valve V6, which is provided in the fixed scroll 41.

An annular protrusion 664b protruding to the right in the axial direction is formed on the second divided body 664. The annular protrusion 664b is internally fitted and fixed to a left opening portion of the first divided body 663.

A peripheral wall 664c that is continuous with the inner-diameter side of a left end of the annular protrusion 664b of the second divided body 664 defines a valve hole 664a. A corner on the inner-diameter side of a right end of the peripheral wall 664c serves as a valve seat 665. The valve seat 665, together with a tapered surface 666 of the valve body 661, constitutes a valve 670 that controls the opening and closing of a flow passage 668 between the valve seat 665 and the tapered surface 666.

A space sandwiched between the peripheral wall 664c of the second divided body 664 and the partition wall portion 663f of the first divided body 663 is the low-pressure space S61. The low-pressure space S61 communicates with the low-pressure chamber 20 through a communication hole 663d formed in the first divided body 663.

A partition wall portion 664f having a through-hole 664g is formed at the axial center of the second divided body 664.

A space surrounded by the partition wall portion 664f and the peripheral wall 664c serves as the back-pressure space S63 into which the control fluid Pb flows. The back-pressure space S63 communicates with the back-pressure chamber 50 through a communication hole 664e formed in the second divided body 664.

A lid member 609 is attached to an inner peripheral surface of a left end opening portion of the second divided body 664 in a sealed manner by screwing.

A space sandwiched between the partition wall portion 664f of the second divided body 664 and the lid member 609 is one high-pressure space S62. The one high-pressure space S62 communicates with the high-pressure chamber 30 through a communication hole 664h formed in the second divided body 664.

The pressure-sensitive body 662 is disposed between the lid member 609 and the valve body 661.

The pressure-sensitive body 662 is a bellows which is composed of a body portion 662a and a closing portion 662b, and the inside of which is maintained in vacuum. The pressure-sensitive body 662 also functions as biasing means for biasing the valve body 661 in the opening direction.

The valve body 661 includes a large-diameter body portion 661a having the tapered surface 666; a medium-diameter body portion 661b extending from the large-diameter body portion 661a to the left in the axial direction; a small-diameter body portion 661c having a smaller diameter and protruding from the medium-diameter body portion 661b to the left in the axial direction; and an extending shaft portion 661d extending from the large-diameter body portion 661a to the right in the axial direction.

The large-diameter body portion 661a is disposed in the low-pressure space S61. The tapered surface 666 that is reduced in diameter as the tapered surface 666 extends toward the left in the axial direction is formed on the large-diameter body portion 661a.

In addition, regardless of whether the valve 670 is in an open state or a closed state, the large-diameter body portion 661a is disposed at a position that is spaced apart from the partition wall portion 663f to the left in the axial direction. That is, the pressure of the suction fluid Ps in the low-pressure space S61 always acts on the large-diameter body portion 661a toward the left in the axial direction.

The medium-diameter body portion 661b is inserted through the through-hole 664g from the back-pressure space S63 side.

Since a gap between an inner peripheral surface of the partition wall portion 664f which constitutes the through-hole 664g and an outer peripheral surface of the medium-diameter body portion 661b is very small, the refrigerant hardly moves between the one high-pressure space S62 and the back-pressure space S63 via the gap. In addition, each of the inner peripheral surface of the partition wall portion 664f and the outer peripheral surface of the medium-diameter body portion 661b is a smooth surface having a constant diameter along the axial direction, and both surfaces are slidable relative to each other.

The small-diameter body portion 661c is fitted and connected to a recess 662e, which is formed in the closing portion 662b, in the low-pressure space S61.

The extending shaft portion 661d is inserted through the through-hole 663g. The extending shaft portion 661d has a larger diameter than the medium-diameter body portion 661b.

Since a gap between an inner peripheral surface of the partition wall portion 663f which constitutes the through-hole 663g and an outer peripheral surface of the extending shaft portion 661d is very small, the refrigerant hardly moves between the other high-pressure space S62' and the low-pressure space S61 via the gap. In addition, each of the inner peripheral surface of the partition wall portion 663f and the outer peripheral surface of the extending shaft portion 661d is a smooth surface having a constant diameter along the axial direction, and both surfaces are slidable relative to each other.

In addition, communication passages 667a and 667b are formed in the valve body 661.

The communication passage 667a is formed with a U-shaped cross-section, extends from the left side of an outer peripheral surface of the medium-diameter body portion 661b to the inner-diameter side, then extends substantially orthogonally rightward in the axial direction at the radial center of the medium-diameter body portion 661b, and further extends substantially orthogonally outward in the radial direction at the axial center of the medium-diameter body portion 661b.

The communication passage 667a is formed so as to always communicate with the one high-pressure space S62 and the back-pressure space S63 within the movement range of the valve body 661.

Incidentally, the communication passage 667a may be formed by forming a communication passage extending linearly from a left end surface of the small-diameter body portion 661c of the valve body 661 toward the right in the axial direction, allowing each communication passage, which extends in the radial direction, to communicate with the communication passage, and then closing the left side of the communication passage extending linearly, or may be formed during the manufacture of the valve body by an additional machining device, more specifically, a 3D printer that is one example, and the forming method may be changed as appropriate as long as the communication passage 667a can be formed.

The communication passage 667b is formed with an L-shaped cross-section, extends from a right end surface of the extending shaft portion 661d toward the left in the axial direction, and then extends substantially orthogonally outward in the radial direction on the right side in the axial direction of the medium-diameter body portion 661b.

The communication passage 667b is formed so as to always communicate with the other high-pressure space S62' and the back-pressure space S63 within the movement range of the valve body 661.

The valve body 661 is configured such that the pressure of each of the control fluid Pb and the suction fluid Ps acts on the large-diameter body portion 661a and the pressure of the discharge fluid Pd acts on the extending shaft portion 661d.

An effective pressure-receiving surface serving as the back pressure-receiving surface of the valve body 661 on which the pressure of the control fluid Pb acts is substantially the same as an area (A6 - C6) obtained by subtracting a portion (C6 - E) of a cross-section C6 of the medium-diameter body portion 661b, the portion being located outside the flow passage cross-section E of the communication passage 667a, from a portion (A6 - E) of a flow passage cross-section A6 of the valve seat 665 at the location where the tapered surface 666 is in contact with the valve seat 665 with the tapered surface 666 seated thereon, the portion being located outside the flow passage cross-section E of the communication passage 667b. Hereinafter, the effective pressure-receiving surface of the valve body 661 on which the pressure of the control fluid Pb acts is referred to as an "effective pressure-receiving surface (A6 - C6)".

An effective pressure-receiving surface serving as the high pressure-receiving surface of the valve body 661 on which the pressure of the discharge fluid Pd acts is substantially the same as a portion (B6 - E) of a cross-section B6 of the extending shaft portion 661d, the portion being located outside the flow passage cross-section E of the communication passage 667b. Hereinafter, the effective pressure-receiving surface of the valve body 661 on which the pressure of the discharge fluid Pd acts is referred to as an "effective pressure-receiving surface (B6 - E)".

An effective pressure-receiving surface serving as the low pressure-receiving surface of the valve body 661 on which the pressure of the suction fluid Ps acts is substantially the same as an area (A6 - B6) obtained by subtracting the portion (B6 - E) of the cross-section B6 of the extending shaft portion 661d, the portion being located outside the flow passage cross-section E of the communication passage 667b, from the portion (A6 - E) of the flow passage cross-section A6 of the valve seat 665, the portion being located outside the flow passage cross-section E of the communication passage 667b. Hereinafter, the effective pressure-receiving surface of the valve body 661 on which the pressure of the suction fluid Ps acts is referred to as an "effective pressure-receiving surface (A6 - B6)".

The cross-section B6 of the extending shaft portion 661d is larger in diameter and wider than the cross-section C6 of the small-diameter body portion 661c (B6 > C6). Therefore, the effective pressure-receiving surface (A6 - C6) is wider than the effective pressure-receiving surface (A6 - B6) ((A6 - C6) > (A6 - B6)).

In addition, regardless of whether the valve 670 is in an open state or a closed state, the closing portion 662b of the pressure-sensitive body 662 is disposed at a position that is spaced apart from the partition wall portion 664f to the left in the axial direction. That is, the pressure of the discharge fluid Pd in the one high-pressure space S62 always acts on the pressure-sensitive body 662 toward the left in the axial direction.

An effective pressure-receiving surface serving as the high pressure-receiving surface of the pressure-sensitive body 662 on which the pressure of the discharge fluid Pd acts is substantially the same as an area (D6 - C6 + E) obtained by subtracting the portion (C6 - E) of the cross-section C6 of the medium-diameter body portion 661b, the portion being located outside the flow passage cross-section E of the communication passage 667a, from an effective pressure-receiving surface D6 of the pressure-sensitive body 662. Hereinafter, the effective pressure-receiving surface of the pressure-sensitive body 662 on which the pressure of the discharge fluid Pd acts is referred to as an "effective pressure-receiving surface (D6 - C6 + E)".

Next, the opening and closing operation of the back-pressure control valve V6 will be described. In the housing 660, the suction fluid Ps flows into the low-pressure space S61, the discharge fluid Pd flows into the high-pressure spaces S62 and S62', and the control fluid Pb flows into the back-pressure space S63.

The valve body 661 is pushed to the left in the axial direction by a force (F_{Ps6} = Ps x (A6 - B6)) generated due to the pressure of the suction fluid Ps acting on the effective pressure-receiving surface (A6 - B6), a force (F_{Pd61} = Pd x (B6 - E)) generated due to the pressure of the discharge fluid Pd acting on the effective pressure-receiving surface (B6 - E), and a force (F_{Pd62} = Pd x (D6 - C6 + E)) generated due to the pressure of the discharge fluid Pd acting on the effective pressure-receiving surface (D6 - C6 + E) (that is, with the leftward direction defined as positive, a force F₆₁ = F_{Ps6} + F_{Pd61} + F_{Ps62} acts on the valve body 661).

In addition, the valve body 661 is pushed to the right in the axial direction by a force (F_{Pb6} = Pb x (A6 - C6)) generated due to the pressure of the control fluid Pb acting on the effective pressure-receiving surface (A6 - C6) and the biasing force (F_{b6}) of the pressure-sensitive body 662 (that is, with the rightward direction defined as positive, a force F₆₂ = F_{Pb6} + F_{b6} acts on the valve body 661).

When the force F₆₁ is equal to or greater than the force F₆₂, the valve body 661 moves to the left in the axial direction and is seated on the valve seat 665 (F₆₁ ≥ F₆₂). That is, the valve 670 is brought into a closed state. In addition, the closing portion 662b of the pressure-sensitive body 662 moves to the left in the axial direction together with the valve body 661 while contracting the body portion 662a.

When the force F₆₁ is less than the force F₆₂, the valve body 661 moves to the right in the axial direction (force F₆₁ < force F₆₂). That is, the valve 670 is brought into an open state. In addition, the opening degree of the valve 670 increases as the tapered surface 666 of the valve body 661 separates from the valve seat 665. In addition, the closing portion 662b of the pressure-sensitive body 662 moves to the right in the axial direction together with the valve body 661 while the body portion 662a extends.

Regardless of whether the valve 670 is in an open state or a closed state, the discharge fluid Pd that has flowed into the communication passage 667a from the one high-pressure space S62 is depressurized by the throttling action, and is supplied to the back-pressure space S63 as the control fluid Pb.

Similarly, the discharge fluid Pd that has flowed into the communication passage 667b from the other high-pressure space S62' is depressurized by the throttling action, and is supplied to the back-pressure space S63 as the control fluid Pb.

When the valve 670 is in an open state, the control fluid Pb that has passed through the communication passage 667a or the communication passage 667b and has flowed into the back-pressure space S63 is divided into a flow passing through the communication hole 664e and a flow passing through the valve 670.

The control fluid Pb that has passed through the communication hole 664e is supplied to the back-pressure chamber 50. Accordingly, the pressure of the control fluid Pb in the back-pressure chamber 50 can be increased.

In addition, the control fluid Pb that has flowed into the valve 670 is depressurized according to the opening degree of the valve 670, and is supplied to the low-pressure space S61 as the suction fluid Ps.

When the pressure of the control fluid Pb tends to become insufficient and the valve 670 is in a closed state, the control fluid Pb is prevented from being supplied to the low-pressure space S61 as the suction fluid Ps. Meanwhile, the discharge fluid Pd not only passes through the communication passage 667a from the one high-pressure space S62 and flows into the back-pressure space S63, but also passes through the communication passage 667b from the other high-pressure space S62' and flows into the back-pressure space S63. Accordingly, the pressure of the control fluid Pb can be increased in a shorter time than in the fourth embodiment.

As described above, since the back-pressure control valve V6 of the present embodiment is provided with the communication passage 667a that allows communication between the one high-pressure space S62 and the back-pressure space S63, and the communication passage 667b that allows communication between the other high-pressure space S62' and the back-pressure space S63, the scroll compressor C can be adjusted by employing the back-pressure control valve V6 that is adjusted in accordance with desired specifications. That is, since it is not necessary to machine the scroll compressor C side, the scroll compressor C can be easily adjusted.

In addition, the back-pressure control valve V6 is configured such that the high-pressure spaces S62 and S62' are provided at both axial ends of the housing 660 and the pressure of the discharge fluid Pd acts on each of the valve body 661 and the pressure-sensitive body 662. According to this configuration, the back-pressure control valve V6 allows the valve body 661 to be easily seated on the valve seat 665.

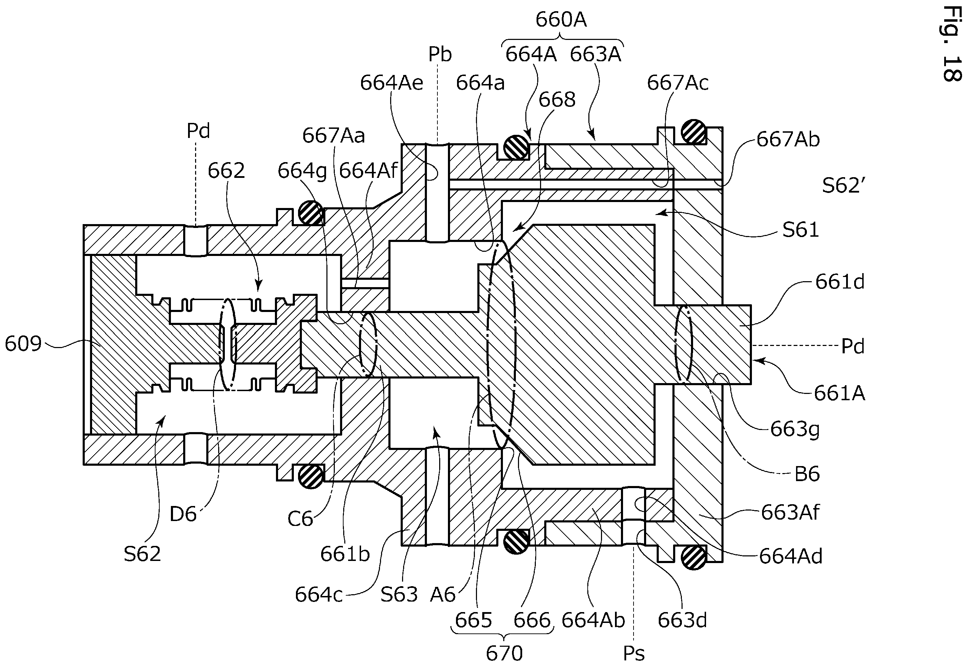

Incidentally, in the present embodiment, a configuration in which the communication passages 667a and 667b are formed in the valve body 661 has been described; however, referring to FIG. 18 illustrating Modification Example 6-1, communication passages 667Aa, 667Ab, and 667Ac may be formed in a housing 660A, and a valve body 661A in which a communication passage is not formed may be applied.

In more detail, the communication passage 667Aa penetrates axially through a portion of a partition wall portion 664Af of a second divided body 664A on the outer-diameter side of the through-hole 664g. The communication passage 667Aa communicates with the one high-pressure space S62 and the back-pressure space S63.

A right end surface of an annular protrusion 664Ab of the second divided body 664A is in pressure contact with a partition wall portion 663Af of a first divided body 663A in a sealed manner when the second divided body 664A is internally fitted and fixed to the first divided body 663A.

Incidentally, the sealing between the annular protrusion 664Ab and the partition wall portion 663Af is not limited to pressure contact, and may be achieved by a seal member such as a packing, or may be changed as appropriate.

In addition, a communication hole 664Ad is formed in the annular protrusion 664Ab so as to penetrate therethrough in the radial direction. The communication hole 664Ad communicates with the communication hole 663d of the first divided body 663A.

The communication passage 667Ab penetrates axially through a portion of the partition wall portion 663Af of the first divided body 663A on the outer-diameter side of the through-hole 663g. The communication passage 667Ab is formed at a position where the phase thereof is different from that of the communication hole 663d in the circumferential direction. The communication passage 667Ab communicates with the other high-pressure space S62'.

The communication passage 667Ac extends from a right end surface of the annular protrusion 664Ab of the second divided body 664A toward the left in the axial direction. The communication passage 667Ac communicates with the communication passage 667Ab of the first divided body 663A and a communication hole 664Ae.

Hereinafter, forces acting on the valve body 661A will be described. An effective pressure-receiving surface serving as the back pressure-receiving surface of the valve body 661A on which the pressure of the control fluid Pb acts is (A6 - C6).

An effective pressure-receiving surface serving as the high pressure-receiving surface of the valve body 661A on which the pressure of the discharge fluid Pd acts is B6. In addition, an effective pressure-receiving surface serving as the high pressure-receiving surface of the pressure-sensitive body 662 on which the pressure of the discharge fluid Pd acts is (D6 - C6).

An effective pressure-receiving surface serving as the low pressure-receiving surface of the valve body 661A on which the pressure of the suction fluid Ps acts is (A6 - B6).

The valve body 661A is pushed to the left in the axial direction by a force (F_{Ps6} = Ps x (A6 - B6)) generated due to the pressure of the suction fluid Ps acting on the effective pressure-receiving surface (A6 - B6), a force (F_{Pd63} = Pd x B6) generated due to the pressure of the discharge fluid Pd acting on the effective pressure-receiving surface B6, and a force (F_{Pd64} = Pd x (D6 - C6)) generated due to the pressure of the discharge fluid Pd acting on the effective pressure-receiving surface (D6 - C6) (that is, with the leftward direction defined as positive, a force F₆₃ = F_{Ps6} + F_{Pd63} + F_{Pd64} acts on the valve body 661A).

In addition, the valve body 661A is pushed to the right in the axial direction by a force (F_{Pb6} = Pb x (A6 - C6)) generated due to the pressure of the control fluid Pb acting on the effective pressure-receiving surface (A6 - C6) and the biasing force (F_{b6}) of the pressure-sensitive body 662 (that is, with the rightward direction defined as positive, the force F₆₂ = F_{Pb6} + F_{b6} acts on the valve body 661A).

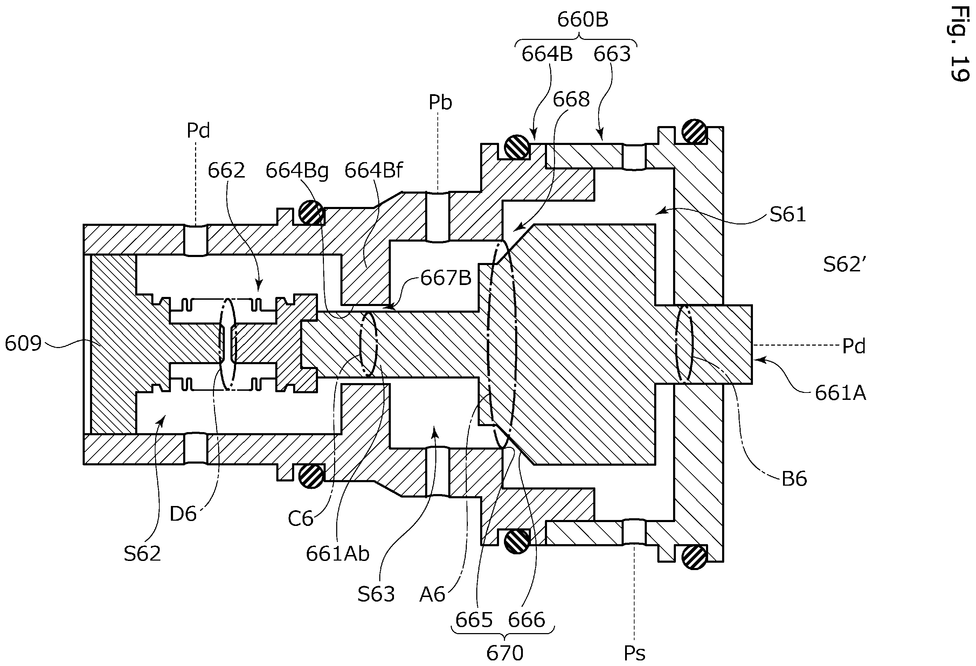

In addition, referring to FIG. 19 illustrating Modification Example 6-2, a clearance may be provided between a second divided body 664B of a housing 660B and the valve body 661A, and the clearance may serve as a communication passage 667B that always communicates with the one high-pressure space S62 and the back-pressure space S63 that are adjacent thereto.

In more detail, a diameter of a through-hole 664Bg of the second divided body 664B, that is, an inner diameter of a partition wall portion 664Bf is slightly larger than a diameter of a medium-diameter body portion 661Ab of the valve body 661A.

Incidentally, forces acting on the valve body 661A are substantially the same as those in Modification Example 6-1.

The embodiments of the present invention have been described above with reference to the drawings; however, the specific configurations are not limited to the embodiments, and modifications or additions that are made without departing from the scope of the present invention are also included in the present invention.

For example, in the first to sixth embodiments, a configuration in which the valve body is seated on the valve seat, thereby closing the valve, that is, bringing the flow passage into a closed state, has been described; however, the present invention is not limited thereto, and a configuration in which the valve body is not seated on the valve seat at the maximum or minimum stroke of the valve body may be employed, or any configuration may be employed as long as the valve opening degree is variable.

In addition, in the first to sixth embodiments, a configuration in which the biasing means is a coil spring or a bellows has been described; however, the present invention is not limited thereto, and the biasing means may be a coiled wave spring or a leaf spring or may be changed as appropriate. In addition, a configuration in which the biasing means is a compression spring and functions as a push spring has been described; however, the present invention is not limited thereto, and the biasing means may be a tension spring. Further, the biasing means may be omitted.

In addition, in the first to sixth embodiments, it has been described that only the back-pressure communication passage in which the valve is disposed is provided; however, the present invention is not limited thereto, and a back-pressure communication passage that allows communication between the high-pressure chamber and the back-pressure chamber may be separately provided. An orifice or a valve may also be provided in the back-pressure communication passage that is separately provided.

In addition, in the first to sixth embodiments, it has been described that only the pressure relief hole that allows communication between the valve and the low-pressure chamber is provided; however, the present invention is not limited thereto, and a pressure relief hole that allows communication between the back-pressure chamber and the low-pressure chamber may be separately provided. An orifice or a valve may also be provided in the pressure relief hole that is separately provided.

In addition, in the first to sixth embodiments, the valve applied to scroll compressors used in air conditioning systems for automobiles or the like has been described; however, the present invention is not limited thereto, and the valve may be used to control various working fluids.

In addition, in the first to sixth embodiments, an example in which the valve is a back-pressure control valve has been described; however, the valve may be, for example, an expansion valve disposed between a condenser and an evaporator in an air conditioning system, a capacity control valve incorporated in a variable capacity compressor in an air conditioning system, or the like.

In addition, each of the suction fluid, the discharge fluid, and the control fluid may be any of a gas, a liquid, and a mixture of gas and liquid.

### {REFERENCE SIGNS LIST}

60, 60A Housing
61, 161, 61A Valve body
62 Coil spring (biasing means)
65 Valve seat
67, 167, 67A Communication passage
68 Passage
260, 260A, 260B Housing
261, 261A Valve body (valve body)
262, 262A Pressure-sensitive body (valve body, biasing means)
265 Valve seat
267a to 267c, 267Aa, 267Ab, 267B Communication passage
268 Passage
360, 360A Housing
361 Pressure-sensitive body
361b Closing portion (valve body)
362 Coil spring (biasing means)
365 Valve seat
367, 367A, 367B Communication passage
368 Passage
371, 371A, 371B Pressure-driven body
372 Disk spring (biasing means)
460, 460A, 460B Housing
461, 461A Valve body (valve body)
462 Pressure-sensitive body (biasing means)
465 Valve seat
467, 467A, 467B Communication passage
468 Passage
560, 560A Housing
561, 561A Valve body
562 Coil spring (biasing means)
565 Valve seat
567, 567Aa, 567Ab Communication passage
568 Passage
660, 660A, 660B Housing
661, 661A Valve body (valve body)
662 Pressure-sensitive body (biasing means)
665 Valve seat
667a, 667b Communication passage
667Aa, 667Ab, 667Ac Communication passage
667B Communication passage
668 Passage
A1 - B1, A2 - B2, D3 -A3, C4 - B4 -E, C4 - B4, B5 - E, B5, B6 -E, D6 - C6 + E, B6, D6 - C6 Effective pressure-receiving surface (high pressure-receiving surface)
A1 - E, A1, A2 - C2, A3, B3b, B3B, C4 - A4 - E, C4 - A4, A5 - E, A5, A6 - C6 Effective pressure-receiving surface (back pressure-receiving surface)
B1 - E, B1, B2 - E, D2 - C2, B2, B3s, B3S, B4, D4 - A4, A5 - B5, A6 - B6 Effective pressure-receiving surface (low pressure-receiving surface)
S1, S21, S21', S31, S41, S41', S51, S61 Low-pressure space
S2, S22, S32, S42, S52, S62, S62' High-pressure space
S3, S23, S33, S43, S53, S63 Back-pressure space
V1 to V6 Back-pressure control valve

## Claims

1. A valve, comprising:
a housing having a high-pressure space into which a high-pressure fluid flows, a back-pressure space into which a back-pressure fluid flows, a low-pressure space into which a low-pressure fluid flows, and a passage configured to provide a communication between the high-pressure space and the back-pressure space; and
a valve body that has a high pressure-receiving surface configured to face the high-pressure space, a back pressure-receiving surface configured to face the back-pressure space, and a low pressure-receiving surface configured to face the low-pressure space, and that controls an opening degree of the passage,
wherein the valve further comprises a communication passage configured to provide a communication between the back-pressure space and the low-pressure space.

2. The valve according to claim 1,
wherein the communication passage is a passage penetrating through the valve body.

3. The valve according to claim 1,
wherein the communication passage is a passage penetrating through the housing.

4. The valve according to claim 1,
wherein the back-pressure space and the low-pressure space are disposed adjacent to each other, and
the communication passage is defined by the housing and the valve body.

5. The valve according to claim 4,
wherein the communication passage is a radial gap between the housing and the valve body, and always communicates with the back-pressure space and the low-pressure space.

6. A valve, comprising:
a housing having a high-pressure space into which a high-pressure fluid flows, a back-pressure space into which a back-pressure fluid flows, a low-pressure space into which a low-pressure fluid flows, and a passage configured to provide a communication between the back-pressure space and the low-pressure space; and
a valve body that has a high pressure-receiving surface configured to face the high-pressure space, a back pressure-receiving surface configured to face the back-pressure space, and a low pressure-receiving surface configured to face the low-pressure space, and that controls an opening degree of the passage,
wherein the valve further comprises a communication passage configured to provide a communication between the high-pressure space and the back-pressure space.

7. The valve according to claim 6,
wherein the communication passage is a passage penetrating through the housing.

8. The valve according to claim 6,
wherein the communication passage is a passage penetrating through the valve body.

9. The valve according to claim 6,
wherein the high-pressure space and the back-pressure space are disposed adjacent to each other, and
the communication passage is defined by the housing and the valve body.

10. The valve according to claim 9,
wherein the communication passage is a radial gap between the housing and the valve body, and always communicates with the high-pressure space and the back-pressure space.
